# EUROPÄISCHE PATENTSCHRIFT

(11) **EP 2 686 352 B1**
(45) Veröffentlichungstag und Bekanntmachung des Hinweises auf die Patenterteilung: **04.04.2018**
(21) Anmeldenummer: 12704396.6
(22) Anmeldetag: 09.02.2012
(51) Int. Cl.: C08F 2/38, C10M 145/14, C10M 145/10, C10M 149/02

(54) **ESTERGRUPPEN-UMFASSENDE COPOLYMERE UND DEREN VERWENDUNG IN SCHMIERMITTELN**
COPOLYMERS COMPRISING ESTER GROUPS AND USE THEREOF IN LUBRICANTS
COPOLYMÈRES COMPRENANT DES GROUPES ESTERS ET UTILISATION DESDITS COPOLYMÈRES DANS DES LUBRIFIANTS

(30) Priorität: 14.03.2011 DE 102011005493
(43) Veröffentlichungstag der Anmeldung: 22.01.2014
(73) Patentinhaber: Evonik Oil Additives GmbH, 64293 Darmstadt (DE)
(72) Erfinder: STÖHR, Torsten, 60389 Frankfurt (DE); EISENBERG, Boris, 64646 Heppenheim (DE); SUCHERT, Ellen, 64625 Bensheim (DE)
(86) Internationale Anmeldenummer: PCT/EP2012/052177
(87) Internationale Veröffentlichungsnummer: WO 2012/123192

(56) Entgegenhaltungen:
- WO-A1-2005/056739
- WO-A1-2006/105926
- WO-A2-2008/154558
- WO-A2-2009/019065
- US-A1- 2009 151 235

## Beschreibung

Die vorliegende Erfindung betrifft Estergruppen-umfassende Copolymere und Schmiermittel, die diese Copolymere enthalten. Weiterhin beschreibt die vorliegende Erfindung die Verwendung von Estergruppen-umfassenden Copolymeren zur Verbesserung der Reibeigenschaften von Schmiermitteln.

Aus Gründen der Kraftstoffersparnis (*fuel economy*) ist es eine Aufgabe moderner Forschung, Planschverluste (*churning loss*) und innere Reibung von Ölen mehr und mehr zu reduzieren. Aufgrund dessen hat sich in den letzten Jahren ein Trend zu immer geringeren Viskositäten der eingesetzten Öle und damit immer dünneren Schmierfilmen, insbesondere bei hohen Temperaturen gezeigt. Demgemäß wird dauerhaft nach Lösungen gesucht, die hiermit einhergehenden Nachteile zu kompensieren.

Die WO 2004/087850 (Evonik RohMax) beschreibt den filmbildenden, reibungsreduzierenden Effekt von PAMA-Blockpolymeren in Schmierölen, so. z.B. Blockpolymeren auf Basis von 2-(4-Morpholinyl)ethylmetharylat MoEMA oder auf Basis von 2-Hydroxyethylmethacrylat (HEMA).

WO 2008/154558 offenbart die Verwendung von Acrylpolymeren, die als Block- oder Homopolymere durch radikalische Polymerisation erhältlich sind, als Zusatz- und Viskositätsmodifizierer in Biokraftstoffen wie Biodiesel.

Die WO 2006/105926 (Evonik RohMax) beschreibt eine Gruppe von neuen Monomeren, so z.B. das 2-Acetoacetoxyethylmethacrylat (AcAcEMA) und das N-(2-Methacryloyloxyethyl)ethylenharnstoff (EUMA; *ethylene urea methacrylat*), sowie die daraus abgeleiteten statistischen und Blockcopolymeren und deren Anwendung in Schmierölen. Laut WO 2006/105926 können die entsprechenden Polymere insbesondere durch radikalische Polymerisation sowie verwandte Verfahren, wie beispielsweise ATRP (=Atom Transfer Radical Polymerisation) oder RAFT (=Reversible Addition Fragmentation Chain Transfer) erhalten werden.

Die WO 2009/019065 (Evonik RohMax) beschreibt sequentielle Block- oder Pfropfpolymere mit filmbildenden Eigenschaften zur Anwendung als Antifatigue-Additiv. Deren Zusammensetzung unterscheidet sich jedoch von der Zusammensetzung der erfindungsgemäßen Estergruppen-umfassenden Copolymere.

Zwei Schriften der Arkema beschreiben Blockpolymere, die über NMP (Nitroxide Mediated Polymerization) erhältlich sind, und deren Verwendung in Schmierölen. Dabei beschreibt die WO 2005/056739 die Verwendung als Viskositätsindex-Verbesserer, wohingegen die EP 1 696 020 die Verwendung als Stockpunkt-Verbesserer darstellt. Die Zusammensetzung dieser Viskositätsindex-Verbesserer unterscheidet sich ebenfalls von der Zusammensetzung der erfindungsgemäßen Estergruppen-umfassenden Copolymere. Ähnlich zur letztgenannten Schrift beschreibt die WO 2009/077396 (Ciba) Blockpolymere, die über NMP erhältlich sind, zur Anwendung als Blodiesel-Fließverbesserer.
US 2009/151235 offenbart die Verwendung von Alkyl(meth)acrylat-Polymeren oder Copolymeren, die durch Nitroxyl-vermittelte kontrollierte radikalische Polymerisation erhältlich sind, als Kaltfließverbesserer in Biodiesel sowie sonstigen Biotreibstoffen.

Die zuvor dargelegten Polymere führen bereits zu einer signifikanten Verbesserung der Reibeigenschaften von Schmierölen. Allerdings besteht das dauerhafte Bedürfnis, das Eigenschaftsprofil von Schmiermitteln, insbesondere Schmierölen, zu verbessern.
In Anbetracht des Standes der Technik ist es nun Aufgabe der vorliegenden Erfindung, ein Additiv beziehungsweise ein Schmiermittel, vorzugsweise ein Schmieröl, mit einem verbesserten Eigenschaftsprofil zur Verfügung zu stellen.

Beispielsweise sollten hochwirksame Additive bereitgestellt werden, die zu einer starken Verbesserung des Reibwertes von Schmiermitteln, insbesondere Schmierölen führen.

Hierbei soll diese Verbesserung bei unterschiedlichen Bedingungen erzielt werden, insbesondere auch im Bereich der "boundary lubrication" bzw. "boundary friction", bei der die Oberflächen quasi in Echtkontakt sind, d.h. der Abstand der Oberflächen geringer ist als deren Oberflächenrauhigkeit - ein Zustand der insbesondere bei geringen Geschwindigkeiten, geringen Viskositäten und/oder hohen Belastungen erreicht wird. Ein solcher Zustand ist beispielsweise bei der Kolbenumkehr im Motor gegeben und wird unter anderem durch den High Frequency Reciprocating Rig (HFRR)-Test simuliert. Siehe zu diesem Thema auch: B.J. Hamrock; B.O. Jacobson; S.R. Schmid: Fundamentals of Fluid Film Lubrication, Marcel Dekker, New York, 2nd Ed., 2004*.*

Ferner sollten die Additive besonders kostengünstig hergestellt werden können. Des Weiteren war Aufgabe der vorliegenden Erfindung, Additive zur Verfügung zu stellen, die hohe Dispergierfähigkeit, hohen Korrosionsschutz (d.h. hohe Metalldesaktivator-Eigenschaften), hohe Stabilität gegen Oxidation und thermische Belastung sowie eine hohe Scherfestigkeit besitzen. Des Weiteren sollten die Additive auch in sehr unpolaren Schmierölen, beispielsweise in vollsynthetischen Ölen, in großen Mengen löslich sein. Darüber hinaus war es eine Aufgabe der vorliegenden Erfindung, Additive zur Verfügung zu stellen, die neben einer reibungsvermindernden Wirkung zusätzlich die Fließeigenschaften der Schmieröls verbessern, also eine viskositätsindexverbessernde Wirkung aufweisen. Ferner sollten die Additive eine Wirkung als Verschleißschutz-Additiv und/oder als Antifatigue-Additive zeigen.

Man unterscheidet hier zwei Gruppen von Defekten an metallischen Oberflächen von Getrieben, insbesondere an Verzahnungen und Wälzlagern:
1. Verschleiß (*wear*) durch kontinuierlichen oberflächlichen Materialabtrag bzw. Fressen (*scuffing*) durch plötzlichen Materialabtrag nach oberflächlichem Verschweißen beider Reibpartner.
2. Ermüdung (*fatigue*), die durch Grauflecken (*grey staining, surface fatigue, micro-pitting*) bzw. Grübchen (*sub*-*surface fatigue, pitting*) sichtbar wird. Diese Schäden entstehen durch Abplatzen bzw. Herausbrechen von Material aufgrund von Rissen, die 20-40µm bzw. 100-500µm unterhalb der Oberfläche durch Schubspannungen im Metallgitter hervorgerufen werden.

Gelöst werden diese sowie weitere nicht explizit genannte Aufgaben, die jedoch aus den hierin einleitend diskutierten Zusammenhängen ohne weiteres ableitbar oder erschließbar sind, durch Copolymere mit allen Merkmalen des Patentanspruchs 1. Zweckmäßige Abwandlungen der erfindungsgemäßen Copolymere werden in den auf Anspruch 1 rückbezogenen Ansprüchen unter Schutz gestellt.

Gegenstand der vorliegenden Erfindung ist dementsprechend ein Estergruppen-umfassendes Copolymer mit mindestens einem unpolaren Segment P und mindestens einem polaren Segment D, wobei das polare Segment D mindestens 8 Wiederholungseinheiten aufweist und der Gewichtsanteil an dispergierenden Wiederholungseinheiten in dem polaren Segment D, und wobei der Gewichtsanteil an dispergierenden Wiederholungseinheiten in dem unpolaren Segment P unterhalb von 20 Gew.-% bezogen auf das Gewicht des unpolaren Segments P liegt, mindestens 30 % beträgt, bezogen auf das Gewicht des polaren Segments D, weiches dadurch gekennzeichnet ist, dass es durch NMP (Nitroxide Mediated Polymerization) erhältlich ist,
wobei das Copolymer Wiederholungseinheiten umfasst, die von Styrol-Monomeren abgeleitet sind, und Wiederholungseinheiten, die von einem Methacrylat abgeleitet sind,
und wobei die dispergierenden Wiederholungseinheiten von einer oder mehreren ethylenisch ungesättigten, polaren Esterverbindungen der Formel (IV) 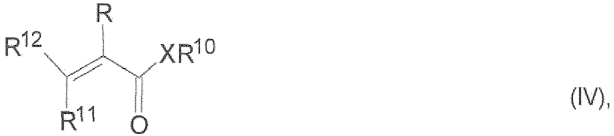 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens einem Heteroatomen, R¹¹ und R¹² unabhängig Wasserstoff oder eine Gruppe der Formel -COX'R^{10'} darstellen, worin X' Sauerstoff oder eine Aminogruppe der Formel -NH- oder-NR^{a'}-, worin R^{a'} für einen Alkylrest mit 1 bis 40 Kohlenstoffatomen steht, und R^{10'} einen 1 bis 100 Kohlenstoffatome umfassenden Rest darstellt und/oder von heterocyclischen Vinylverbindungen abgeleitet sind.

Hierdurch gelingt es auf nicht vorhersehbare Weise, ein Additiv für Schmiermittel, insbesondere Schmieröle, zur Verfügung zu stellen, das ein besonders günstiges Eigenschaftsprofil zeigt. So führen die erfindungsgemäßen Copolymere zu Schmierölen mit hervorragenden Reibeigenschaften. Diese Verbesserung kann überraschend über einen großen Frequenzbereich erzielt werden. Hierdurch schützen diese Copolymere Oberflächen vor Verschleiß.

Weiterhin kann durch den Einsatz der vorliegenden Copolymere eine Verringerung der Materialermüdung (Antifatigue-Additiv) erhalten werden. Hierbei erzielen diese Additive eine Abnahme der zuvor dargelegten Bildung von Grauflecken (*grey staining, surface fatigue, micro-pitting*) bzw. Grübchen (*sub-surface fatigue, pitting*).

Darüber hinaus können diese Additive einfach und kostengünstig hergestellt werden, wobei insbesondere kommerziell erhältliche Komponenten eingesetzt werden können. Hierbei kann die Produktion großtechnisch erfolgen, ohne dass hierzu neue oder konstruktiv aufwendige Anlagen benötigt werden.

So können die Polymere überraschend scherstabil ausgestaltet werden, so dass die Schmiermittel eine sehr lange Haltbarkeit aufweisen. Des Weiteren kann das erfindungsgemäß zu verwendende Additiv eine Vielzahl von wünschenswerten Eigenschaften in dem Schmiermittel bewirken. Beispielsweise können Schmiermittel mit hervorragenden Tieftemperatureigenschaften oder Viskositätseigenschaften hergestellt werden, die die vorliegenden Estergruppen-umfassenden Polymere aufweisen. Hierdurch kann die Anzahl an unterschiedlichen Additiven minimiert werden. Darüber hinaus sind die vorliegenden Estergruppen-umfassenden Polymere mit vielen Additiven kompatibel. Hierdurch können die Schmiermittel an verschiedenste Anforderungen angepasst werden.

Die Copolymere der vorliegenden Erfindung zeigen hervorragende Dispergiereigenschaften. Hierdurch verhindern diese Copolymere eine Bildung von Ablagerungen. Die Copolymere bringen ausgezeichnete Korrosionsschutz-Eigenschaften, d.h. Metalldesaktivator-Eigenschaften, mit sich. Die erfindungsgemäßen Copolymere binden hervorragend Metallionen. Hierdurch wird eine vorzeitige Oxidation von Schmierölen vermindert.

Weiterhin zeigen die zu verwendenden Additive keine nachteiligen Wirkungen auf den Kraftstoffverbrauch oder die Umweltverträglichkeit des Schmiermittels.

Unter Estergruppen-umfassenden Polymeren werden im Rahmen der vorliegenden Erfindung Polymere verstanden, die durch Polymerisation von Monomerzusammensetzungen erhältlich sind, die ethylenisch ungesättigte Verbindungen mit mindestens einer Estergruppe, die nachfolgend als Estermonomere bezeichnet werden, umfassen. Dementsprechend enthalten diese Polymere Estergruppen als Teil der Seitenkette. Zu diesen Polymeren gehören insbesondere Polyalkyl(meth)acrylate (PAMA), Polyalkylfumarate und/oder Polyalkylmaleate.

Estermonomere sind an sich bekannt. Hierzu gehören insbesondere (Meth)acrylate, Maleate und Fumarate, die unterschiedliche Alkoholreste aufweisen können. Der Ausdruck (Meth)acrylate umfasst Methacrylate und Acrylate sowie Mischungen aus beiden. Diese Monomere sind weithin bekannt.

Das Estergruppen-umfassende Polymer umfasst vorzugsweise mindestens 40 Gew.-%, besonders bevorzugt mindestens 60 Gew.-%, insbesondere bevorzugt mindestens 80 Gew.-% und ganz besonders bevorzugt mindestens 90 Gew.-% Wiederholungseinheiten, die von Estermonomeren abgeleitet sind.

Erfindungsgemäße Copolymere umfassen mindestens ein unpolares Segment P und mindestens ein polares Segment D, wobei das polare Segment D mindestens 8 Wiederholungseinheiten aufweist und der Gewichtsanteil an dispergierenden Wiederholungseinheiten in dem polaren Segment D mindestens 30 % beträgt, bezogen auf das Gewicht des polaren Segments D.

Der Begriff Wiederholungseinheit ist in der Fachwelt weithin bekannt. Die vorliegenden Polymere werden über radikalische Polymerisation von Monomeren gemäß dem NMP-Verfahren erhalten. Hierbei werden Doppelbindungen unter Bildung von kovalenten Bindungen geöffnet. Dementsprechend ergibt sich die Wiederholungseinheit aus den eingesetzten Monomeren.

Die erfindungsgemäßen Polymere weisen polare und unpolare Segmente auf. Der Begriff "Segment" bezeichnet hierbei einen Abschnitt des Polymers. Die Segmente können eine im Wesentlichen konstante Zusammensetzung aus einem oder mehreren Monomerbausteinen aufweisen. Darüber hinaus können die Segmente einen Gradienten aufweisen, wobei die Konzentration verschiedener Monomerbausteine (Wiederholungseinheiten) über die Segmentlänge variiert. Die polaren Segmente D unterscheiden sich von den unpolaren Segmenten P über den Anteil an dispergierenden Monomeren. Die unpolaren Segmente können höchstens einen geringen Anteil an dispergierenden Wiederholungseinheiten (Monomerbausteinen) aufweisen, wohingegen die polaren Segmente einen hohen Anteil an dispergierenden Wiederholungseinheiten (Monomerbausteinen) umfassen.

Unter dispergierenden Monomeren werden insbesondere Monomere mit funktionellen Gruppen verstanden, wobei angenommen werden kann, dass Polymere mit diesen funktionellen Gruppen Partikel, insbesondere Russpartikel, in Lösung halten können (vgl. R.M. Mortier, S.T. Orszulik (eds.): "Chemistry and Technology of Lubricants", Blackie Academic & Professional, London, 2nd ed. 1997). Hierzu gehören insbesondere Monomere, die von bor-, phosphor-, silicium-, schwefel-, sauerstoff- und stickstoffhaltige Gruppen aufweisen, wobei sauerstoff- und stickstoff-funktionalisierte Monomere bevorzugt sind.

Die polaren Segmente D umfassen erfindungsgemäß mindestens 8, bevorzugt mindestens 12 und ganz besonders bevorzugt mindestens 15 Wiederholungseinheiten. Hierbei umfassen die polaren Segmente D mindestens 30 Gew.-%, bevorzugt mindestens 40 Gew.-% an dispergierenden Wiederholungseinheiten, bezogen auf das Gewicht des polaren Segments D. Neben den dispergierenden Wiederholungseinheiten kann das polare Segment auch Wiederholungseinheiten aufweisen, die keine dispergierende Wirkung aufweisen. Das polare Segment kann statistisch aufgebaut sein, so dass die unterschiedlichen Wiederholungseinheiten eine statistische Verteilung über die Segmentlänge aufweisen. Weiterhin kann das polare Segment blockartig oder in Form eines Gradienten aufgebaut sein, so dass die nicht-dispergierenden Wiederholungseinheiten und die dispergierenden Wiederholungseinheiten innerhalb des polaren Segments eine ungleichmäßige Verteilung aufweisen.

Das unpolare, hydrophobe Segment P kann einen geringen Anteil an dispergierenden Wiederholungseinheiten umfassen, der unterhalb von 20 Gew.-%, bevorzugt unterhalb von 10 Gew.% und besonders bevorzugt unterhalb von 5 Gew.-%, bezogen auf das Gewicht des unpolaren Segments P liegt. Gemäß einer besonders zweckmäßigen Ausgestaltung umfasst das unpolare Segment P im Wesentlichen keine dispergierenden Wiederholungseinheiten.

Das unpolare Segment P des Estergruppen-umfassenden Polymers kann 5 bis 100 Gew. %, insbesondere 20 bis 98 Gew. %, vorzugsweise 30 bis 95 und ganz besonders bevorzugt 70 bis 92 Gew.-% Wiederholungseinheiten aufweisen, die von Estermonomeren mit 7 bis 15 Kohlenstoffatomen im Alkoholrest abgeleitet sind.

Gemäß einem besonderen Aspekt kann das unpolare Segment P des Estergruppen-umfassenden Polymers 0 bis 80 Gew.-%, vorzugsweise 0,5 bis 60 Gew. %, besonders bevorzugt 2 bis 50 Gew.-% und ganz besonders bevorzugt 5 bis 20 Gew.-% Wiederholungseinheiten aufweisen, die von Estermonomeren mit 16 bis 40 Kohlenstoffatomen im Alkoholrest abgeleitet sind.

Weiterhin kann das unpolare Segment P des Estergruppen-umfassenden Polymers 0 bis 40 Gew.-%, vorzugsweise 0,1 bis 30 Gew.-% und besonders bevorzugt vorzugsweise 0,5 bis 20 Gew. % Wiederholungseinheiten aufweisen, die von Estermonomeren mit 1 bis 6 Kohlenstoffatomen im Alkoholrest abgeleitet sind.

Das unpolare Segment P des Estergruppen-umfassenden Polymers umfasst vorzugsweise mindestens 40 Gew.-%, besonders bevorzugt mindestens 60 Gew.-%, insbesondere bevorzugt mindestens 80 Gew.-% und ganz besonders bevorzugt mindestens 90 Gew.-% Wiederholungseinheiten, die von Estermonomeren abgeleitet sind.

Mischungen, aus denen die unpolaren Segmente P des erfindungsgemäßen Estergruppen-umfassenden Polymeren erhältlich sind, können 0 bis 40 Gew. %, insbesondere 0,1 bis 30 Gew.-% und besonders bevorzugt 0,5 bis 20 Gew. % einer oder mehrerer ethylenisch ungesättigten Esterverbindungen der Formel (I) enthalten 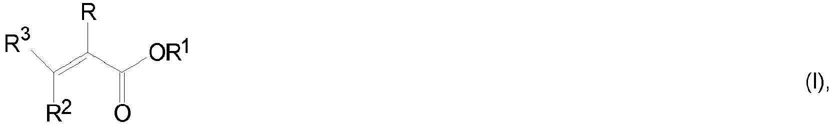 worin R Wasserstoff oder Methyl darstellt, R¹ einen linearen oder verzweigten Alkylrest mit 1 bis 6 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 6 Kohlenstoffatomen bedeutet.

### Beispiele für Komponente (I) sind unter anderem

(Meth)acrylate, Fumarate und Maleate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert.-Butyl(meth)acrylat und Pentyl(meth)acrylat, Hexyl(meth)acrylat; Cycloalkyl(meth)acrylate, wie Cyclopentyl(meth)acrylat, Cyclohexyl(meth)acrylat; (Meth)acrylate, die sich von ungesättigten Alkoholen ableiten, wie 2-Propinyl(meth)acrylat, Allyl(meth)acrylat und Vinyl(meth)acrylat.

Vorzugsweise enthalten die zu polymerisierenden Zusammensetzungen zur Herstellung der unpolaren Segmente P 5 bis 100 Gew.-%, bevorzugt 10 bis 98 Gew. %, insbesondere bevorzugt 20 bis 95 Gew. % einer oder mehreren ethylenisch ungesättigten Esterverbindungen der Formel (II) 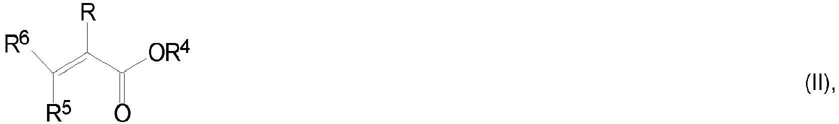 worin R Wasserstoff oder Methyl darstellt, R⁴ einen linearen oder verzweigten Alkylrest mit 7 bis 15 Kohlenstoffatomen bedeutet, R⁵ und R⁶ unabhängig
Wasserstoff oder eine Gruppe der Formel -COOR" darstellen, worin R" Wasserstoff oder eine Alkylgruppe mit 7 bis 15 Kohlenstoffatomen bedeutet.

### Beispiele für Komponente (II) sind unter anderem:

(Meth)acrylate, Fumarate und Maleate, die sich von gesättigten Alkoholen ableiten, wie 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat;
(Meth)acrylate, die sich von ungesättigten Alkoholen ableiten, wie z. B. Oleyl(meth)acrylat; Cycloalkyl(meth)acrylate, wie 3-Vinylcyclohexyl(meth)acrylat, Bornyl(meth)acrylat; sowie die entsprechenden Fumarate und Maleate.

Darüber hinaus weisen bevorzugte Monomerzusammensetzungen zur Herstellung der unpolaren Segmente P 0 bis 80 Gew. %, vorzugsweise 0,5 bis 60 Gew. %, besonders bevorzugt 2 bis 50 Gew.-% und ganz besonders bevorzugt 5 bis 20 Gew.-% einer oder mehreren ethylenisch ungesättigten Esterverbindungen der Formel (III) auf 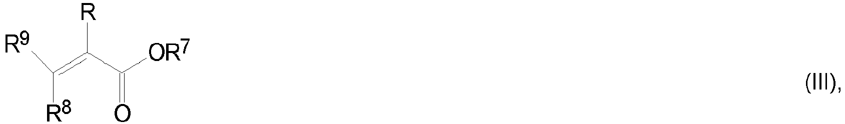 worin R Wasserstoff oder Methyl darstellt, R⁷ einen linearen oder verzweigten Alkylrest mit 16 bis 40, bevorzugt 16 bis 30 Kohlenstoffatomen bedeutet, R⁸ und R⁹ unabhängig Wasserstoff oder eine Gruppe der Formel -COOR''' darstellen, worin R''' Wasserstoff oder eine Alkylgruppe mit 16 bis 40, bevorzugt 16 bis 30 Kohlenstoffatomen bedeutet.

Beispiele für Komponente (III) sind unter anderem (Meth)acrylate, die sich von gesättigten Alkoholen ableiten, wie Hexadecyl(meth)acrylat, 2-Methylhexadecyl(meth)acrylat, Heptadecyl(meth)acrylat, 5-iso-Propylheptadecyl(meth)acrylat,
4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
Cycloalkyl(meth)acrylate, wie 2,4,5-Tri-t-butyl-3-vinylcyclohexyl(meth)acrylat, 2,3,4,5-Tetra-t-butylcyclohexyl(meth)acrylat;
sowie die entsprechenden Fumarate und Maleate.

Die Esterverbindungen mit langkettigem Alkoholrest, insbesondere die Komponenten (II) und (III), lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911, Oxo Alcohol® 7900, Oxo Alcohol® 1100; Alfol® 610, Alfol® 810, Lial® 125 und Nafol®-Typen (Sasol); Alphanol® 79 (ICI); Epal® 610 und Epal® 810 (Afton); Linevol® 79, Linevol® 911 und Neodol® 25E (Shell); Dehydad®, Hydrenol®- und Lorol®-Typen (Cognis); Acropol® 35 und Exxal® 10 (Exxon Chemicals); Kalcol® 2465 (Kao Chemicals). Von den ethylenisch ungesättigten Esterverbindungen sind die (Meth)acrylate gegenüber den Maleaten und Fumaraten besonders bevorzugt, d.h. R², R³, R⁵, R⁶, R⁸ und R⁹ der Formeln (I), (II) und (III) stellen in besonders bevorzugten Ausführungsformen Wasserstoff dar.

Falls eine Mischung von Estermonomeren gemäß Formel (II) und Estermonomeren gemäß Formel (III) zur Herstellung der erfindungsgemäßen Copolymeren eingesetzt wird, kann das Gewichtsverhältnis von Estermonomeren gemäß Formel (II) zu den Estermonomeren gemäß Formel (III) in einem weiten Bereich liegen. Vorzugsweise liegt das Verhältnis von Esterverbindungen der Formel (II), die 7 bis 15 Kohlenstoffatome im Alkoholrest aufweisen, zu den Esterverbindungen der Formel (III), die 16 bis 40 Kohlenstoffatome im Alkoholrest aufweisen, im Bereich von 50:1 bis 1:30, besonders bevorzugt im Bereich von 10:1 bis 1:3, insbesondere bevorzugt 5:1 bis 1:1.

Weiterhin kann die Monomermischung zur Herstellung der unpolaren Segmente ethylenisch ungesättigte Monomere umfassen, die sich mit den ethylenisch ungesättigten Esterverbindungen der Formeln (I), (II) und/oder (III) copolymerisieren lassen.

Es sind Comonomere zur Polymerisation gemäß der vorliegenden Erfindung besonders geeignet, die der Formel entsprechen: 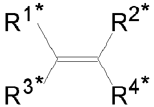
worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; aromatische oder heteroaromatische Gruppen mit 3 bis 40, vorzugsweise 5 bis 18 Kohlenstoffatomen, welche mit den zuvor dargelegten Gruppen, vorzugsweise Alkylgruppen mit 1 bis 6 Kohlenstoffatomen oder Halogenen substituiert sein können; C(=Y*)R^{5*}, C(=Y*)NR^{6*}R^{7*}, Y*C(=Y*)R^{5*}, SOR^{5*}, SO₂R^{5*}, OSO₂R⁵*, NR^{8*}SO₂R^{5*}, PR^{5*}₂, P(=Y*)R^{5*}₂, Y*PR^{5*}₂, Y*P(=Y*)R^{5*}_{2,} NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*}eine Alkylgruppe mit 1 bis 20 Kohlenstoffatomen, eine Alkylthio mit 1 bis 20 Kohlenstoffatomen, OR¹⁵ (R¹⁵ ist Wasserstoff oder ein Alkalimetall), Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*}Wasserstoff, lineare oder verzweigte Alkyl- oder Arylgruppen mit 1 bis 20 Kohlenstoffatomen sind;
R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.
Zu den bevorzugten Comonomeren gehören unter anderem Vinylhalogenide, wie beispielsweise Vinylchlorid, Vinylfluorid, Vinylidenchlorid und Vinylidenfluorid;
Styrol-Monomere, wie zum Beispiel Styrol, substituierte Styrole mit einem Alkylsubstituenten in der Seitenkette, wie z. B. alpha-Methylstyrol und alpha-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Vinyl- und Isoprenylether;
Maleinsäure und Maleinsäurederivate ungleich den unter (I), (II) und (III) genannten, wie beispielsweise Maleinsäureanhydrid, Methylmaleinsäureanhydrid, Maleinimid, Methylmaleinimid;
Fumarsäure und Fumarsäurederivate ungleich den unter (I), (II) und (III) genannten. Weiterhin können Monomermischungen zur Herstellung der unpolaren Segmente dispergierende Monomere umfassen.

Der Anteil an Comonomeren beträgt vorzugsweise 0 bis 50 Gew.-%, besonders bevorzugt 0,1 bis 40 Gew.-% und ganz besonders bevorzugt 0,5 bis 20 Gew.-%, bezogen auf das Gewicht der Monomerenzusammensetzung zur Herstellung des unpolaren Segments P.

Erfindungsgemäß umfasst das unpolare Segment P Wiederholungseinheiten, die von Methacrylaten mit vorzugsweise 7 bis 40, besonders bevorzugt 10 bis 30 Kohlenstoffatomen im Alkylrest abgeleitet sind, und Wiederholungseinheiten, die von Styrol-Monomeren abgeleitet sind. Der Anteil an Styrol-Monomeren beträgt vorzugsweise 0 bis 40 Gew.-%, besonders bevorzugt 0,1 bis 20 Gew.-% und ganz besonders bevorzugt 0,5 bis 5 Gew.-%, bezogen auf das Gewicht der Monomerenzusammensetzung zur Herstellung des unpolaren Segments P. Der Anteil an Methacrylaten beträgt vorzugsweise mindestens 60 Gew.-%, besonders bevorzugt mindestens 80 Gew.-% und ganz besonders bevorzugt mindestens 90 Gew.-%, bezogen auf das Gewicht der Monomerenzusammensetzung zur Herstellung des unpolaren Segments P.

Gemäß einer weiteren Ausführungsform umfasst das unpolare Segment P Wiederholungseinheiten, die von Methacrylaten mit vorzugsweise 7 bis 40, besonders bevorzugt 10 bis 30 Kohlenstoffatomen im Alkylrest abgeleitet sind, und Wiederholungseinheiten, die von Acrylaten mit vorzugsweise 7 bis 40, besonders bevorzugt 10 bis 30 Kohlenstoffatomen im Alkylrest abgeleitet sind. Der Anteil an Acrylaten mit vorzugsweise 7 bis 40, besonders bevorzugt 10 bis 30 Kohlenstoffatomen im Alkylrest beträgt vorzugsweise 0 bis 40 Gew.-%, besonders bevorzugt 0,1 bis 20 Gew.-% und ganz besonders bevorzugt 0,5 bis 5 Gew.-%, bezogen auf das Gewicht der Monomerenzusammensetzung zur Herstellung des unpolaren Segments P. Der Anteil an Methacrylaten beträgt vorzugsweise mindestens 60 Gew.-%, besonders bevorzugt mindestens 80 Gew.-% und ganz besonders bevorzugt mindestens 90 Gew.-%, bezogen auf das Gewicht der Monomerenzusammensetzung zur Herstellung des unpolaren Segments P.

Neben dem unpolaren Segment P umfasst ein erfindungsgemäß einsetzbares Polymer mindestens ein polares Segment D, welches Wiederholungseinheiten umfasst, die von dispergierenden Monomeren abgeleitet sind.

Dispergierende Monomere werden seit langem zur Funktionalisierung von polymeren Additiven in Schmierölen eingesetzt und sind dem Fachmann daher bekannt (vgl. R.M. Mortier, S.T. Orszulik (eds.): "Chemistry and Technology of Lubricants", Blackie Academic & Professional, London, 2nd ed. 1997). Erfindungsgemäß werden heterocyclische Vinylverbindungen und/oder ethylenisch ungesättigte, polare Esterverbindungen der Formel (IV) 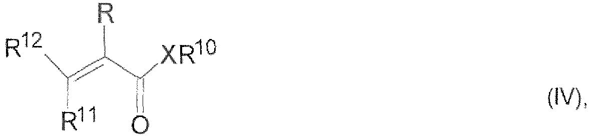 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 40, bevorzugt 1 bis 4 Kohlenstoffatomen steht, R¹⁰ einen 2 bis 1000, insbesondere 2 bis 100, vorzugsweise 2 bis 20 Kohlenstoffatome umfassenden Rest mit mindestens einem, vorzugsweise mindestens zwei Heteroatomen, R¹¹ und R¹² unabhängig Wasserstoff oder eine Gruppe der Formel - COX'R^{10'} darstellen, worin X' Sauerstoff oder eine Aminogruppe der Formel -NH- oder-NR^{a'}-, worin R^{a'} für einen Alkylrest mit 1 bis 40, bevorzugt 1 bis 4 Kohlenstoffatomen steht, und R^{10'} einen 1 bis 100, bevorzugt 1 bis 30 und besonders bevorzugt 1 bis 15 Kohlenstoffatome umfassenden Rest darstellt, als dispergierende Monomere eingesetzt.
Der Ausdruck "2 bis 1000 Kohlenstoff umfassenden Rest" kennzeichnet Reste organischer Verbindungen mit 2 bis 1000 Kohlenstoffatomen. Ähnliche Definitionen gelten für entsprechende Begriffe. Er umfasst aromatische und heteroaromatische Gruppen sowie Alkyl-, Cycloalkyl-, Alkoxy-, Cycloalkoxy-, Alkenyl-, Alkanoyl-, Alkoxycarbonylgruppen sowie heteroaliphatische Gruppen. Dabei können die genannten Gruppen verzweigt oder nicht verzweigt sein. Des Weiteren können diese Gruppen übliche Substituenten aufweisen. Substituenten sind beispielsweise lineare und verzweigte Alkylgruppen mit 1 bis 6 Kohlenstoffatomen, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; aromatische Gruppen, wie Phenyl oder Naphthyl; Aminogruppen, Hydroxygruppen, Ethergruppen, Estergruppen sowie Halogenide.
Erfindungsgemäß bezeichnen aromatische Gruppen Reste ein oder mehrkerniger aromatischer Verbindungen mit vorzugsweise 6 bis 20, insbesondere 6 bis 12 C-Atomen. Heteroaromatische Gruppen kennzeichnen Arylreste, worin mindestens eine CH-Gruppe durch N ersetzt ist und/oder mindestens zwei benachbarte CH-Gruppen durch S, NH oder O ersetzt sind, wobei heteroaromatische Gruppen 3 bis 19 Kohlenstoffatome aufweisen.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophßn, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Zu den bevorzugten Alkylgruppen gehören die Methyl-, Ethyl-, Propyl-, Isopropyl-, 1-Butyl-, 2-Butyl-, 2-Methylpropyl-, tert.-Butylrest, Pentyl-, 2-Methylbutyl-, 1,1-Dimethylpropyl-, Hexyl-, Heptyl-, Octyl-, 1,1,3,3-Tetramethylbutyl, Nonyl-, 1-Decyl-, 2-Decyl-, Undecyl-, Dodecyl-, Pentadecyl-und die Eicosyl-Gruppe.

Zu den bevorzugten Cycloalkylgruppen gehören die Cyclopropyl-, Cyclobutyl-, Cyclopentyl-, Cyclohexyl-, Cycloheptyl- und die Cyclooctyl-Gruppe, die gegebenenfalls mit verzweigten oder nicht verzweigten Alkylgruppen substituiert sind.

Zu den bevorzugten Alkanoylgruppen gehören die Formyl-, Acetyl-, Propionyl-, 2-Methylpropionyl-, Butyryl-, Valeroyl-, Pivaloyl-, Hexanoyl-, Decanoyl- und die Dodecanoyl-Gruppe.

Zu den bevorzugten Alkoxycarbonylgruppen gehören die Methoxycarbonyl-, Ethoxycarbonyl-, Propoxycarbonyl-, Butoxycarbonyl-, tert.-Butoxycarbonyl-Gruppe, Hexyloxycarbonyl-, 2-Methylhexyloxycarbonyl-, Decyloxycarbonyl- oder Dodecyloxycarbonyl-Gruppe.

Zu den bevorzugten Alkoxygruppen gehören Alkoxygruppen, deren Kohlenwasserstoffrest eine der vorstehend genannten bevorzugten Alkylgruppen ist.

Zu den bevorzugten Cycloalkoxygruppen gehören Cycloalkoxygruppen, deren Kohlenwasserstoffrest eine der vorstehend genannten bevorzugten Cycloalkylgruppen ist.

Zu den bevorzugten Heteroatomen, die im Rest R¹⁰ enthalten sind, gehören unter anderem Sauerstoff, Stickstoff, Schwefel, Bor, Silicium und Phosphor, wobei Sauerstoff und Stickstoff bevorzugt sind.
Der Rest R¹⁰ umfasst mindestens ein, vorzugsweise mindestens zwei, bevorzugt mindestens drei Heteroatome.
Vorzugsweise weist der Rest R¹⁰ in Esterverbindungen der Formel (IV) mindestens 2 unterschiedliche Heteroatome auf. Hierbei kann der Rest R¹⁰ in mindestens einer der Esterverbindungen der Formel (IV) mindestens ein Stickstoffatom und mindestens ein Sauerstoffatom umfassen.

Beispiele für ethylenisch ungesättigte, polare Esterverbindungen der Formel (IV) sind unter anderem Aminoalkyl(meth)acrylate, Aminoalkyl(meth)acrylamide,
Hydroxylalkyl(meth)acrylate, heterocyclische (Meth)acrylate und/oder carbonylhaltige (Meth)acrylate.

Zu den Hydroxyalkyl(meth)acrylate zählen unter anderem
2-Hydroxypropyl(meth)acrylat,
3,4-Dihydroxybutyl(meth)acrylat,
2-Hydroxyethyl(meth)acrylat,
3-Hydroxypropyl(meth)acrylat,
2,5-Dimethyl-1,6-hexandiol(meth)acrylat und
1,10-Decandiol(meth)acrylat.

Zweckmäßgie carbonylhaltige (Meth)acrylate umfassen beispielsweise
2-Carboxyethyl (meth)acrylat,
Carboxymethyl(meth)acrylat,
Oxazolidinylethyl(meth)acrylat,
N-(M ethacryloyloxy)formamid,
Acetonyl(meth)acrylat, 2-Acetoacetoxyethyl(meth)acrylat,
Bernsteinsäure-mono-2-(meth)acryloyloxyethylester,
N-(Meth)acryloylmorpholin,
N-(Meth)acryloyl-2-pyrrolidinon,
N-(2-(Meth)acryloyloxyethyl)-2-pyrrolidinon,
N-(3-(Meth)acryloyloxypropyl)-2-pyrrolidinon,
N-(2-(Meth)acryloyloxypentadecyl)-2-pyrrolidinon,
N-(3-(Meth)acryloyloxyheptadecyl)-2-pyrrolidinon und
N-(2-(Meth)acryloyloxyethyl)ethylenharnstoff.

Zu den heterocyclischen (Meth)acrylaten zählen unter anderem
2-(1-Imidazolyl)ethyl(meth)acrylat, 2-(4-Morpholinyl)ethyl(meth)acrylat und 1-(2-(Meth)acryloyloxyethyl)-2-pyrrolidon.

Von besonderem Interesse sind des Weiteren Aminoalkyl(meth)acrylate und Aminoalkyl(meth)acrylatamide, wie zum Beispiel
Dimethylaminopropyl(meth)acrylat,
Dimethylaminodiglykol(meth)acrylat,
Dimethylaminoethyl(meth)acrylat,
Dimethylaminopropyl(meth)acrylamid,
3-Diethylaminopentyl(meth)acrylat und
3-Dibutylaminohexadecyl(meth)acrylat.

Darüber hinaus können Phosphor-, Bor- und/oder Silicium-haltige (Meth)acrylate zur Herstellung der polaren Segmente D eingesetzt werden, wie 2-(Dimethylphosphato)propyl(meth)acrylat,
2-(Ethylenphosphito)propyl(meth)acrylat,
Dimethylphosphinomethyl(meth)acrylat,
Dimethylphosphonoethyl(meth)acrylat,
Diethyl(meth)acryloylphosphonat,
Dipropyl(meth)acryloylphosphat, 2-(Dibutylphosphono)ethyl(meth)acrylat, 2,3-Butylen(meth)acryloylethylborat,
Methyldiethoxy(meth)acryloylethoxysilan,
Diethylphosphatoethyl(meth)acrylat.

Zu den bevorzugten heterocyclischen Vinylverbindungen zählen unter anderem 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, N-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole, wobei N-Vinylimidazol und N-Vinylpyrrolidon besonders bevorzugt zur Funktionalisierung eingesetzt werden.

Die zuvor dargelegten Monomere können einzeln oder als Mischung eingesetzt werden.

Gemäß einem besonderen Aspekt der vorliegenden Erfindung kann mindestens ein Heteroatom im Rest R¹⁰ in mindestens einer der Esterverbindungen der Formel (IV) über mindestens 4 Atome, besonders bevorzugt über mindestens 6 Atome von der Gruppe X getrennt sein.

Vorzugsweise stellt der Rest R¹⁰ in mindestens einer der Esterverbindungen gemäß Formel (IV) eine Gruppe der Formel (V) dar 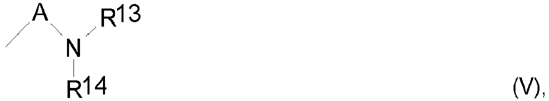 worin A eine verbindende Gruppe mit 1 bis 500 Kohlenstoffatomen, bevorzugt 1 bis 100 Kohlenstoffatome und besonders bevorzugt 1 bis 50 Kohlenstoffatome und die Reste R¹³ und R¹⁴ jeweils unabhängig Wasserstoff oder eine Alkylgruppe mit 1 bis 40 Kohlenstoffatomen, besonders bevorzugt 1 bis 20 Kohlenstoffatome und ganz besonders bevorzugt 1 bis 4 Kohlenstoffatome bedeuten. Der Ausdruck "verbindende Gruppe mit 1 bis 500 Kohlenstoffatomen" kennzeichnet Reste organischer Verbindungen, die 1 bis 500 Kohlenstoffatome umfassen. Er umfasst aromatische und heteroaromatische Gruppen sowie Alkyl-, Cycloalkyl-, Alkoxy-, Cycloalkoxy-, Alkenyl-, Alkanoyl-, Alkoxycarbonylgruppen sowie heteroalipatische Gruppen. Diese Reste wurden zuvor näher erläutert.

Zu den bevorzugten verbindenden Gruppen in Formel (V) gehören Gruppen der Formel (VI) 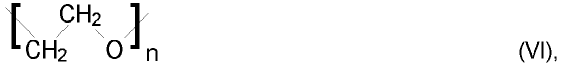 worin n eine ganze Zahl im Bereich von 1 bis 8, bevorzugt 1 bis 6 und besonders bevorzugt 1 bis 3 bedeutet.

Vorzugsweise stellt der Rest R¹⁰ in mindestens einer Esterverbindung der Formel (IV) eine Gruppe der Formel (VII) dar

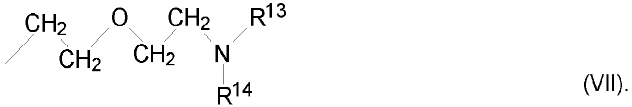

Besonders bevorzugt kann als dispergierendes Monomer Dimethylaminodiglykolmethacrylat (2-[2-(Dimethylamino)ethoxy]ethylmethacrylat; 2-Methyl-2-propensäure-2-[2-(dimethylamino) ethoxy]ethylester) gemäß Formel (VIII) eingesetzt werden

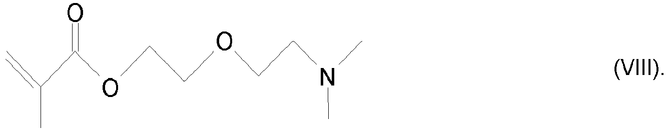

Gemäß einem weiteren Aspekt der vorliegenden Erfindung kann der Rest R¹⁰ in mindestens einer der Esterverbindungen gemäß Formel (IV) mindestens eine, besonders bevorzugt mindestens zwei Gruppen der Formel -CO- umfassen. Die Gruppen der Formel -COkönnen Carbonylgruppen von Ketonen und/oder Aldehyden, Carbonylgruppen von Carbonsäuren, Carbonsäureestern und/oder Carbonsäureamiden und/oder Carbonylgruppen von Kohlensäurederivaten, insbesondere von Harnstoffgruppen und/oder Urethangruppen darstellen.
Hierbei können mindestens zwei Gruppen der Formel -CO- über höchstens 4 Atome miteinander verbunden sein.

Vorzugsweise kann der Rest R¹⁰ in mindestens einer Esterverbindung der Formel (IV) eine Gruppe der Formel (IX) darstellen

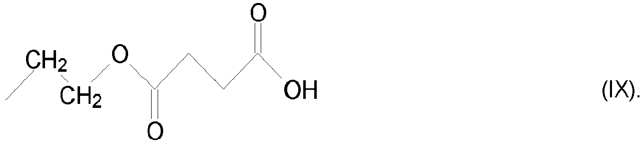

Besonders bevorzugt umfasst die Komponente d) Bernsteinsäure-mono-2-methacryloyloxyethylester gemäß Formel (X)

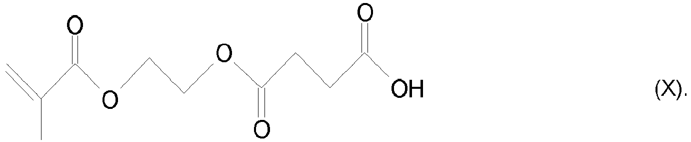

Vorzugsweise kann der Rest R¹⁰ in mindestens einer Esterverbindung der Formel (IV) eine Gruppe der Formel (XI) darstellen

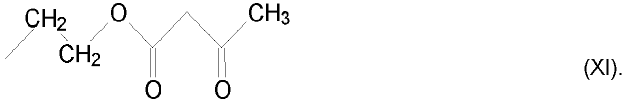

Besonders bevorzugt kann als dispergierendes Monomer 2-Acetoacetoxyethylmethacrylat (3-Oxo-butansäure-2-[(2-methyl-1-oxo-2-propenyl)oxy] ethyl ester) gemäß Formel (XII) eingesetzt werden

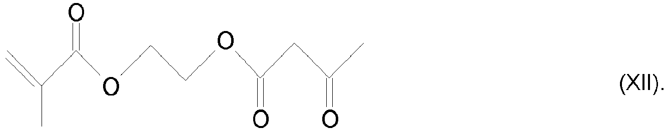

Gemäß einem weiteren Aspekt der vorliegenden Erfindung kann der Rest R¹⁰ in mindestens einer der Esterverbindungen gemäß Formel (IV) mindestens eine Gruppe der Formel -CO- und mindestens ein Stickstoffatom umfassen.

Hierbei kann der Rest R¹⁰ in mindestens einer der Esterverbindungen gemäß Formel (IV) mindestens eine Harnstoffgruppe aufweisen, wobei Harnstoffgruppen im allgemeinen durch die Formel -NR^{b}-CO-NR^{c}- dargestellt werden können, worin die Reste R^{b} und R^{c} jeweils unabhängig Wasserstoff oder eine Gruppe mit 1 bis 40 Kohlenstoffatomen, bevorzugt 1 bis 20 Kohlenstoffatome und besonders bevorzugt 1 bis 4 Kohlenstoffatomen darstellen oder die Reste R^{b} und R^{c} einen Ring mit 1 bis 80 Kohlenstoffatome bilden können.

Vorzugsweise kann der Rest R¹⁰ in mindestens einer Esterverbindung der Formel (IV) eine Gruppe der Formel (XIII) darstellen 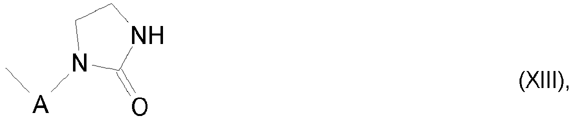 worin A eine verbindende Gruppe mit 1 bis 500 Kohlenstoffatomen, bevorzugt 1 bis 100 Kohlenstoffatome und besonders bevorzugt 1 bis 50 Kohlenstoffatome bedeutet. Der Begriff "verbindende Gruppe mit 1 bis 500 Kohlenstoffatomen" wurde zuvor näher erläutert.

Besonders bevorzugt kann als dispergierendes Monomer N-(2-Methacryloyloxyethyl)ethylenharnstoff (2-Methyl-2-propensäure-2-(2-oxo-1-imidazolidinyl)ethylester) gemäß Formel (XIV) eingesetzt werden

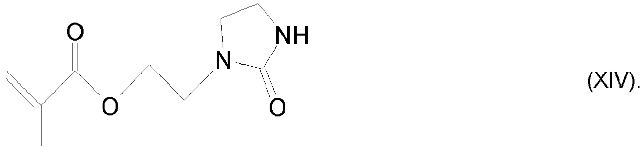

Von besonderem Interesse sind insbesondere Estergruppen-umfassende Polymere, die unter Verwendung von 2-Hydroxypropylmethacrylat, 2-Hydroxyethylmethacrylat, Bernsteinsäure-mono-2-methacryloyloxyethylester, N-(2-Methacryloyloxyethyl)-ethylenharnstoff, 2-Acetoacetoxyethylmethacrylat, 2-(4-Morpholinyl)ethylmethacrylat, Dimethylaminodiglykolmethacrylat, Dimethylaminoethylmethacrylat und/oder Dimethylaminopropylmethacrylamid erhalten werden, wobei die Verwendung von N-(2-Methacryloyloxyethyl)ethylenharnstoff, 2-Acetoacetoxyethylmethacrylat, 2-(4-Morpholinyl)ethylmethacrylat mit besonderen Vorteilen verbunden ist. Hierbei ist 2-Acetoacetoxyethylmethacrylat ganz besonders bevorzugt.

Neben den dispergierenden Monomeren kann eine Zusammensetzung zur Herstellung der polaren Segmente auch nicht dispergierende Monomere enthalten, die zuvor dargelegt wurden. Hierzu gehören insbesondere ethylenisch ungesättigte Esterverbindungen der Formeln (I), (II) und/oder (III).

Gemäß einer besonders bevorzugten Ausführungsform umfasst das polare Segment D Wiederholungseinheiten, die von dispergierenden Methacrylaten gemäß Formel (IV) abgeleitet sind, und Wiederholungseinheiten, die von Styrol-Monomeren abgeleitet sind. Der Anteil an Styrol-Monomeren beträgt vorzugsweise 0 bis 40 Gew.-%, besonders bevorzugt 0,1 bis 30 Gew.-% und ganz besonders bevorzugt 0,5 bis 20 Gew.-%, bezogen auf das Gewicht der Monomerenzusammensetzung zur Herstellung des polaren Segments D. Der Anteil an dispergierenden Methacrylaten gemäß Formel (IV) beträgt vorzugsweise mindestens 50 Gew.-%, besonders bevorzugt mindestens 70 Gew.-% und ganz besonders bevorzugt mindestens 80 Gew.-%, bezogen auf das Gewicht der Monomerenzusammensetzung zur Herstellung des polaren Segments D.

Gemäß einer besonders bevorzugten Ausführungsform umfasst das polare Segment D Wiederholungseinheiten, die von dispergierenden Methacrylaten gemäß Formel (IV) abgeleitet sind, und Wiederholungseinheiten, die von Acrylaten abgeleitet sind. Der Anteil an Acrylaten beträgt vorzugsweise 0 bis 40 Gew.-%, besonders bevorzugt 0,1 bis 30 Gew.-% und ganz besonders bevorzugt 0,5 bis 20 Gew.-%, bezogen auf das Gewicht der Monomerenzusammensetzung zur Herstellung des polaren Segments D. Der Anteil an dispergierenden Methacrylaten gemäß Formel (IV) beträgt vorzugsweise mindestens 50 Gew.-%, besonders bevorzugt mindestens 70 Gew.-% und ganz besonders bevorzugt mindestens 80 Gew.-%, bezogen auf das Gewicht der Monomerenzusammensetzung zur Herstellung des polaren Segments D.

Zweckmäßig kann das Gewichtsverhältnis der hydrophoben Segmente zu den polaren Segmenten im Bereich von 100:1 bis 1:1, besonders bevorzugt im Bereich 30:1 bis 2:1 und ganz besonders bevorzugt im Bereich von 10:1 bis 4:1 liegen.

Die Länge der hydrophoben und polaren Segmente kann in weiten Bereichen variieren. Vorzugsweise weisen die unpolaren Segmente P einen über das Gewicht gemittelten Polymerisationsgrad von mindestens 10, insbesondere mindestens 40 auf. Vorzugsweise liegt der über das Gewicht gemittelte Polymerisationsgrad der hydrophoben Segmente im Bereich von 20 bis 5000, insbesondere von 50 bis 2000.

Der Anteil an dispergierenden Wiederholungseinheiten, bezogen auf das Gewicht des Estergruppen-umfassenden Polymeren, liegt vorzugsweise im Bereich von 0,5 Gew.-% bis 20 Gew.-%, besonders bevorzugt im Bereich von 1,5 Gew.-% bis 15 Gew.-% und ganz besonders bevorzugt im Bereich von 2,5 Gew.-% bis 10 Gew.-%. Hierbei bilden diese Wiederholungseinheiten vorzugsweise eine segmentartige Struktur innerhalb des Estergruppen-umfassenden Polymers aus, so dass bevorzugt mindestens 70 Gew.-%, besonders bevorzugt mindestens 80 Gew.-%, bezogen auf das Gesamtgewicht der dispergierenden Wiederholungseinheiten, Bestandteil eines polaren Segments D sind.

Der Anteil an Wiederholungseinheiten, die von Styrol-Monomeren abgeleitet sind, bezogen auf das Gewicht des Estergruppen-umfassenden Polymeren, kann vorzugsweise im Bereich von 0 Gew.-% bis 40 Gew.-%, insbesondere im Bereich von 0,1 bis 25 Gew.-%, besonders bevorzugt im Bereich von 0,5 Gew.-% bis 10 Gew.-% und ganz besonders bevorzugt im Bereich von 1 Gew.-% bis 5 Gew.-% liegen.

Die vorliegende Erfindung beschreibt Polymere, die vorzugsweise eine hohe Öllöslichkeit aufweisen. Der Begriff öllöslich bedeutet, dass eine Mischung von einem Grundöl und einem Estergruppen-umfassenden Polymer ohne makroskopische Phasenbildung herstellbar ist, die mindestens 0,1 Gew.-%, vorzugsweise mindestens 0,5 Gew.-% der Polymere aufweist. In dieser Mischung kann das Polymer dispergiert und/oder gelöst vorliegen. Die Öllöslichkeit hängt insbesondere vom Anteil der lipophilen Seitenketten sowie vom Grundöl ab. Diese Eigenschaft ist dem Fachmann bekannt und kann für das jeweilige Grundöl leicht über den Anteil an lipophilen Monomeren eingestellt werden.

Von besonderem Interesse sind unter anderem Estergruppen-umfassende Polymere, die vorzugsweise ein gewichtsgemitteltes Molekulargewicht M_{w} im Bereich von 7 500 bis 1 000 000 g/mol, besonders bevorzugt 10 000 bis 600 000 g/mol und ganz besonders bevorzugt 15 000 bis 80 000 g/mol aufweisen.

Das zahlengemittelte Molekulargewicht Mₙ kann vorzugsweise im Bereich von 5 000 bis 800 000 g/mol, besonders bevorzugt 7 500 bis 500 000 g/mol und ganz besonders bevorzugt 10 000 bis 80 000 g/mol liegen.

Zweckmäßig sind darüber hinaus Estergruppen-umfassende Polymere, deren Polydispersitätsindex M_{w}/Mₙ im Bereich von 1 bis 5, besonders bevorzugt im Bereich von 1,05 bis 4 liegt. Das zahlengemittelte und das gewichtsgemittelte Molekulargewicht können durch bekannte Verfahren, beispielsweise die Gelpermeationschromatographie (GPC) bestimmt werden.

Das Estergruppen-umfassende Polymer kann einen vielfältigen Aufbau aufweisen. Beispielsweise kann das Polymere als Diblock-, Triblock-, Multiblock-, Kamm- und/oder Sterncopolymer vorliegen, welches entsprechende polare und unpolare Segmente umfasst. Erfindungsgemäß ist das Copolymer durch NMP (Nitroxide Mediated Polymerization) erhältlich. Das NMP-Verfahren ist dem Fachmann bekannt und beispielsweise in K. Matyjaszewski, T.P. Davis, Handbook of Radical Polymerization, Wiley-Interscience, Hoboken 2002 beschrieben.

Kennzeichnend für diese Verfahren ist die Gegenwart von stabilen Nitroxylradikal-Verbindungen, auch N-Oxylradikal-Verbindungen genannt, von denen angenommen wird, dass diese reversibel mit den Kettenenden reagieren können.
Zu den besonders bevorzugten Nitroxylradikal-Verbindungen gehören bevorzugt Verbindungen gemäß der Struktur (XV) 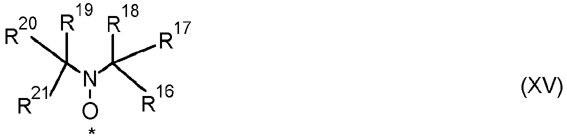
worin R¹⁶, R¹⁷, R¹⁸, R¹⁹, R²⁰ und R²¹ jeweils unabhängig einen 1 bis 100, bevorzugt 1 bis 30 und besonders bevorzugt 1 bis 15 Kohlenstoffatome umfassenden Rest darstellen, wobei zwei oder mehr Reste R¹⁶, R¹⁷, R¹⁸, R¹⁹, R²⁰ und R²¹ einen Ring bilden können, vorzugsweise eine C₁-C₁₀Alkyl-, C₁-C₁₀Alkenyl-, C₁-C₁₀-Alkoxy-, C₆-C₁₈-Aryl-, C₇-C₁₉-Aralkyl-, C₆-C₁₈-Aryl-C₁-C₈-Alkyl- oder C₃-C₁₈-Heteroarylgruppe,
wobei bevorzugt die Reste R¹⁸ und R¹⁹zusammen einen Ring, besonders bevorzugt eine (C₁-C₄)-Alkylenbrücke bilden können, welche gesättigt oder ungesättigt, unsubstituiert oder substituiert sein kann, insbesondere mit einem oder mehreren Substituenten, ausgewählt aus einem 1 bis 30 Kohlenstoffatome umfassenden Rest, C₁-C₈-Amido-, Halogen, Oxy-, Hydroxy-, Amino-, Alkylamino-, Dialkylamino-, Arylamino-, Diarylamino-, Alkylcarbonyloxy-, Arylcarbonyloxy-, Alkylcarbonylamino- und Arylcarbonylaminogruppe. Hierbei können die Reste R¹⁶, R¹⁷, R¹⁸, R¹⁹, R²⁰ und R²¹ Heteroatome enthalten, die endständig oder in der Kohlenstoffkette eingebaut sein können. Zu den besonders bevorzugten Heteroatomen zählen insbesondere Phosphoratome. Demgemäß weisen besonders bevorzugte Nitroxylradikal-Verbindungen mindestens ein Phosphoratom auf.

Gemäß einer besonderen Ausgestaltung der vorliegenden Erfindung stellt mindestens einer der Reste R¹⁶, R¹⁷, R¹⁸, R¹⁹, R²⁰ und R²¹ eine Gruppe der Formel (XVI) dar 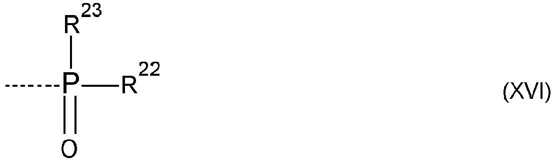 worin
die Reste R²² und R²³ jeweils unabhängig ein Halogenatom, insbesondere ein Chlor-, Brom-, Fluor- oder lodatom, oder einen 1 bis 50, bevorzugt 1 bis 30 und besonders bevorzugt 1 bis 15 Kohlenstoffatome umfassenden Rest darstellt, bevorzugt einen Alkyl, Cycloalkyl, Alkoxy, Aryloxy, Aryl, Aralkyloxy, Perfluoralkyl, Aralkyl mit 1 bis 20 Kohlenstoffatomen darstellen; und die gestrichelte Linie die Bindung der Gruppe gemäß Formel (XVI) an das Kohlenstoffatom darstellt, welches mit dem Stickstoffatom der N-Oxid-Gruppe verbunden ist.

Die zuvor dargelegten Nitroxylradikal-Verbindungen können einzeln oder als Mischung eingesetzt werden.

Vorzugsweise werden als Nitroxylradikal-Verbindungen 2,2,6,6-Tetramethylpiperidin-1-oxyl (TEMPO) und/oder die an Position 4 des Heterocyclus substituierten Derivate des 2,2,6,6-Tetramethylpiperidin-1-oxyls eingesetzt, wobei die Derivate einen oder mehrere Substituenten ausgewählt aus einem 1 bis 30 Kohlenstoffatome umfassenden Rest, C₁-C₈-Amido-, Halogen, Oxy-, Hydroxy-, Amino-, Alkylamino-, Dialkylamino-, Arylamino-, Diarylamino-, Alkylcarbonyloxy-, Arylcarbonyloxy-, Alkylcarbonylamino- und Arylcarbonylaminogruppen aufweisen, worin der 1 bis 30 Kohlenstoffatome umfassende Rest besonders bevorzugt eine (C₁-C₁₀)-Alkyl-, (C₁-C₁₀)-Alkenyl-, (C₁-C₁₀)-Alkoxy-, (C₆-C₁₈)-Aryl-, (C₇-C₁₉)-Aralkyl-, (C₆-C₁₈)-Aryl-(C₁-C₈)-Alkyl- oder (C₃-C₁₈)-Heteroarylgruppe bedeutet. Bevorzugt werden die folgenden Nitroxylradikal-Verbindungen eingesetzt: 2,2,6,6-Tetramethylpiperidin-1-oxyl (TEMPO), 4-Methoxy-2,2,6,6-tetramethylpiperidin-1-oxyl (4-MeO-TEMPO), 4-Oxo-2,2,6,6-tetramethylpiperidin-1-oxyl (4-oxo-TEMPO), 4-Hydroxy-2,2,6,6-tetramethylpiperidin-1-oxyl (4-hydroxy-TEMPO), 4-Benzoyloxy-2,2,6,6-tetramethylpiperidin-1-oxyl (BnO-TEMPO), 4-Acetamido-2,2,6,6-tetramethylpiperidin-1-oxyl, 4-Acetamino-2,2,6,6-tetramethylpiperidin-1-oxyl (AA-TEMPO), 4-Amino-2,2,6,6-tetramethylpiperidin-1-oxyl, N,N Dimethylamino-2,2,6,6-tetramethyl-piperidin-1-oxyl (NNDMA-TEMPO), 3,6-Dihydro-2,2,6,6-tetramethyl-1(2H)-pyridinyl-oxyl (DH-TEMPO), Bis-(2,2,6,6-tetramethylpiperidin-1-oxyl-4-yl) sebacat, oder eine Mischung von zwei oder mehr dieser Verbindungen.

Ganz besonders bevorzugt sind Nitroxylradikal-Verbindungen, die aus N-tert.-Butyl-1-phenyl-2-methylpropyl-N-oxid,
N-tert.-Butyl-1-(2-naphthyl)-2-methylpropyl-N-oxid,
N-tert.-Butyl-1-diethylphosphono-2,2-dimethylpropyl-N-oxid,
N-tert.-Butyl-1 -dibenzylphosphono-2,2-dimethylpropyl-N-oxid,
N-Phenyl-1-diethylphosphono-2,2-dimethylpropyl-N-oxid,
N-Phenyl-1-diethylphosphono-l-methylethyl-N-oxid,
N-1-(Phenyl-2-methylpropyl)- 1-diethylphosphono- 1-methylethyl-N-oxid ausgewählt sind.

Das stabile freie Radikal kann in das Reaktionsgemisch der Polymerisation oder Copolymerisation in einer Menge von 0,005 bis 5 Gew.-% der Summe der Masse an polymerisierbarem Monomeren und stabilen freien Radikals eingesetzt werden.

Je nach Art der Polymerisation kann ein separat zugegebener Polymerisationsinitiator eingesetzt werden. Zu diesen gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethyl-hexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid,
1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Der separat zugegebene Polymerisationsinitiator kann in den üblichen Mengen eingesetzt werden, wobei die Menge an Nitroxylradikal-Verbindungen ausreichen muss, um eine kontrollierte Polymerisation sicherzustellen.

Die zuvor dargelegten Nitroxylradikal-Verbindungen können gemäß einem besonderen Aspekt in Form eines Initiators bei dem Polymerisationsverfahrens eingesetzt werden, welcher die genannten Nitroxylradikal-Verbindungen und mindestens einen Radikalstarter freisetzt.

Zu den besonders bevorzugt einsetzbaren Initiatoren, welche die genannten Nitroxylradikale freisetzen können, gehören unter anderem Verbindungen gemäß Formel (XVII) 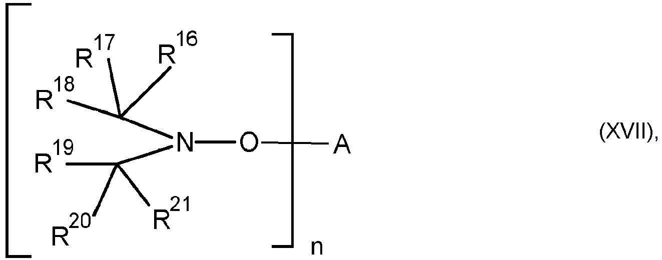 worin
die Reste R¹⁶, R¹⁷, R¹⁸, R¹⁹, R²⁰ und R²¹ die zuvor in Formel (XV) dargelegte Bedeutung haben, n eine ganze Zahl im Bereich von 1 bis 10, besonders bevorzugt 1 bis 5 und ganz besonders bevorzugt 1 ist und die Gruppe A einen 1 bis 50, bevorzugt 1 bis 30 und besonders bevorzugt 1 bis 15 Kohlenstoffatome umfassenden Rest darstellt. Besonders bevorzugt umfasst die Gruppe A in Formel (XVII) mindestens eine Carbonsäure-, Ester- und/oder Cyanogruppe und/oder mindestens ein Halogenatom, vorzugsweise ein Fluoratom. Hierbei können auch Derivate der genannten Gruppen, beispielsweise Salze eingesetzt werden.

Initiatoren, die die genannten Nitroxylradikal-Verbindungen freisetzen, sind unter anderem in US 6,657,043, eingereicht am 15.03.2002 beim Amerikanischen Patentamt (USPTO) mit der Anmeldenummer 09/979,124; WO 2004/014926 A, eingereicht am 23.07.2003 beim Französischen Patentamt mit der Anmeldenummer PCT/FR2003/002328; WO 00/49027 A, eingereicht am 10.02.2000 beim Französischen Patentamt mit der Anmeldenummer PCT/FR00/00335; beschrieben. Zu den genannten Initiatoren, die sowohl einen Radikalstarter als auch eine Nitroxylradikal-Verbindung freisetzen, zählen insbesondere Hydroxylaminverbindungen, wie zum Beispiel 2-Methyl-2-(N-tert.-Butyl-1-diethylphosphono-2,2-dimethylpropyl-N-oxyl)-propansäure, 2-Methyl-2-(N-tert.-Butyl-1-dibenzylphosphono-2,2-dimethylpropyl-N-oxyl)-propansäure, 2-Methyl-2-(N-Phenyl-1-diethylphosphono-2,2-dimethylpropyl-N-oxyl)-propansäure, 2-Methyl-2-(N-Phenyl-1-diethylphosphono-1-methylethyl-N-oxyl)-propansäure und/oder 2-Methyl-2-(N-1-(Phenyl-2-methylpropyl)-1-diethylphosphono-1-methylethyl-N-oxyl)-propansäure. Die genannten Verbindungen können auch als Salze oder Propansäureester, beispielsweise Methylester, verwendet werden.

Ein besonders bevorzugte Initiator (2-Methyl-2-(N-tert.-Butyl-1-diethylphosphono-2,2-dimethylpropyl-N-oxyl)-propansäure), welcher gleichzeitig sowohl Radikalquelle/Initiator als auch ein Nitroxylradikal in einem Molekül bereitstellt, ist unter der Handelsbezeichnung BlocBuilder® MA erhältlich:

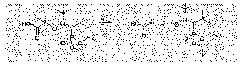

Gemäß einer bevorzugten Ausführungsform der vorliegenden Erfindung ist das Copolymer durch eine mehrstufige Polymerisation erhältlich, wobei in der ersten Stufe ein unpolares Segment P und in der letzten Stufe ein polares Segment D hergestellt wird. Besonders bevorzugt kann hierbei eine mehrstufige Polymerisation unter Verwendung einer übertragbaren Nitroxylradikal-Verbindung mit mindestens einem Phosphoratom so durchgeführt werden, dass die übertragbare Nitroxylradikal-Verbindung mit mindestens einem Phosphoratom am Ende des polaren Segments D lokalisiert ist.

Die Polymerisation kann bei Normaldruck, Unter- oder Überdruck durchgeführt werden. Auch die Polymerisationstemperatur ist unkritisch. Im Allgemeinen liegt sie jedoch im Bereich von - 20° - 200°C, vorzugsweise 50° - 150°C und besonders bevorzugt 80° - 130°C.

Die Polymerisation kann mit oder ohne Lösungsmittel durchgeführt werden. Der Begriff des Lösungsmittels ist hierbei weit zu verstehen. Die Auswahl des Lösungsmittels erfolgt nach der Polarität der eingesetzten Monomeren, wobei bevorzugt 100N-Öl, leichteres Gasöl und/oder aromatische Kohlenwasserstoffe, beispielsweise Toluol oder Xylol eingesetzt werden können.

Die erfindungsgemäßen Additive werden insbesondere in Schmiermitteln, bevorzugt Schmierölen, hierin auch als Schmierölzusammensetzungen bezeichnet, eingesetzt, um deren Reibeigenschaften zu verbessern. Schmieröle bezeichnen Schmiermittel, die bei Raumtemperatur fließfähig sind. Diese Schmiermittel umfassen üblich ein Basis- oder Grundöl. Zu den bevorzugten Grundölen gehören insbesondere Mineralöle, synthetische Öle und natürliche Öle.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluss von Braunkohle sowie Hydrieren von Stein- oder Braunkohle ist ebenfalls möglich. Dementsprechend weisen Mineralöle je nach Herkunft unterschiedliche Anteile an aromatischen, cyclischen, verzweigten und linearen Kohlenwasserstoffen auf.

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigte Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interessanten Aspekt umfasst Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im Allgemeinen größer oder gleich 60 Gew.-%, vorzugsweise größer oder gleich 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
   0,7 - 1,0 %,
gering verzweigte Alkane mit 18 bis 31 C-Atome:
   1,0 - 8,0 %,
Aromaten mit 14 bis 32 C-Atomen:
   0,4 - 10,7 %,
Iso- und Cyclo-Alkane mit 20 bis 32 C-Atomen:
   60,7- 82,4 %,
polare Verbindungen:
   0,1 - 0,8%,
Verlust:
   6,9 - 19,4 %.

Ein verbesserte Klasse an Mineralölen (reduzierter Schwefelgehalt, reduzierter Stickstoffgehalt, höherer Viskositätsindex, niedrigerer Stockpunkt) ist durch Wasserstoffbehandlung der Mineralöle gegeben (*hydro isomerization, hydro cracking, hydro treatment, hydro finishing*). Hierbei werden in Wasserstoffpräsenz im Wesentlichen aromatische Anteile reduziert und naphthenische Anteile aufgebaut.

Wertvolle Hinweise hinsichtlich der Analyse von Mineralölen sowie eine Aufzählung von Mineralölen, die eine abweichende Zusammensetzung aufweisen, findet sich beispielsweise in T. Mang, W. Dresel (eds.): "Lubricants and Lubrication", Wiley-VCH, Weinheim 2001; R.M. Mortier, S.T. Orszulik (eds.): "Chemistry and Technology of Lubricants", Blackie Academic & Professional, London, 2nd ed. 1997; oder J. Bartz: "Additive für Schmierstoffe", Expert-Verlag, Renningen-Malmsheim 1994.

Synthetische Öle umfassen unter anderem organische Ester, beispielsweise Diester und Polyester, Polyalkylenglykole, Polyether, synthetische Kohlenwasserstoffe, insbesondere Polyolefine, von denen Polyalphaolefine (PAO) bevorzugt sind, Silikonöle und Perfluoralkylether. Darüber können synthetische Grundöle mit Herkunft aus *gas to liquid* (GTL), *coal to liquid* (CTL) oder *biomass to liquid* (BTL) Prozessen eingesetzt werden. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Basisöle für Schmierölformulierungen werden in Gruppen nach API (American Petroleum Institute) eingeteilt. Mineralöle werden unterteilt in Gruppe I (nicht Wasserstoff-behandelt) und, abhängig von Sättigungsgrad, Schwefelgehalt und Viskositätsindex, in die Gruppen II und III (beide Wasserstoff-behandelt). PAOs entsprechen der Gruppe IV. Alle anderen Basisöle werden in Gruppe V zusammengefasst. Bevorzugte Schmiermittel enthalten vorzugsweise mindestens ein Basisöl gemäß Gruppe II und/oder III, besonders bevorzugt gemäß Gruppe III der zuvor dargelegten Klassifizierung.
Diese Grund- oder Basisöle können auch als Mischungen eingesetzt werden und sind vielfach kommerziell erhältlich.

Die Konzentration des Estergruppen-umfassenden Polymeren in der Schmierölzusammensetzung liegt vorzugsweise im Bereich von 0,01 bis 40 Gew.-%, besonders bevorzugt im Bereich von 0,5 - 25 Gew.-% und ganz besonders bevorzugt im Bereich von 1 - 15 Gew.-%, bezogen auf das Gesamtgewicht der Zusammensetzung.

Neben den erfindungsgemäß einzusetzenden Estergruppen-umfassenden Polymeren können die hier dargelegten Schmierölzusammensetzungen auch weitere Additive und Zusatzstoffe enthalten. Zu diesen Additiven gehören unter anderem VI-Verbesserer, Stockpunktverbesserer und DI-Additive (Dispergiermittel, Detergentien, Entschäumer, Korrosionsinhibitoren, Antioxidationsmittel, Verschleißschutz- und Extremdruckadditive, Reibwertveränderer).

Zu den zusätzlich einsetzbaren VI-Verbesserern gehören insbesondere Polyalkyl(meth)acrylate mit 1 bis 30 Kohlenstoffatomen in der Alkoholgruppe (PAMA; teilsweise N/O-funktionell mit vorteilhaften Zusatzeigenschaften als Dispergiermittel, Verschleißschutzadditiv und/oder Reibwertveränderer), die sich von den in Anspruch 1 dargelegten Copolymeren unterscheiden, sowie Poly(iso)butene (PIB), Fumarat-OlefinCopolymere, Styrol-Maleat-Copolymere, hydrierte Styrol-Dien-Copolymere (HSD) und Olefincopolymere (OCP).

Zu den Stockpunktverbesserern gehören insbesondere Polyalkyl(meth)acrylate (PAMA) mit 1 bis 30 Kohlenstoffatomen in der Alkoholgruppe.

Zusammenstellungen von VI-Verbesserern und Stockpunktverbesserern für Schmieröle sind auch in T. Mang, W. Dresel (eds.): "Lubricants and Lubrication", Wiley-VCH, Weinheim 2001; R.M. Mortier, S.T. Orszulik (eds.): "Chemistry and Technology of Lubricants", Blackie Academic & Professional, London, 2nd ed. 1997; oder J. Bartz: "Additive für Schmierstoffe", Expert-Verlag, Renningen-Malmsheim 1994 dargelegt.

Zweckmäßige Dispergiermittel (*dispersant*) umfassen unter anderem Poly(isobutylen)-Derivate, z.B. Poly(isobutylene)-Succinimide (PIBSI); Ethylen-Propylen-Oligomere mit N/O-Funktionalitäten.

Zu den bevorzugten Detergentien (*detergent*) gehören unter anderem Metall-enthaltende Verbindungen, wie zum Beispiel Phenolate; Salicylate; Thiophosphonate, insbesondere Thiopyrophosphonate, Thiophosphonate und Phosphonate; Sulfonate und Carbonate. Als Metall können diese Verbindungen insbesondere Calcium, Magnesium und Barium enthalten. Diese Verbindungen können bevorzugt neutral oder überbasisch eingesetzt werden.

Von besonderem Interesse sind des Weiteren Entschäumer (*defoamer*), wobei diese vielfach in Silicon-haltige und Silicon-freie Entschäumer unterteilt werden. Zu den Silicon-haltigen Antischaummittel zählen unter anderem lineares Poly(dimethylsiloxan) und cyclisches Poly(dimethylsiloxan). Als Silicon-freie Entschäumer können vielfach Polyether, z.B. Poly(ethylenglycol) oder Tributylphosphat eingesetzt werden.

Gemäß einer besonderen Ausgestaltung können die erfindungsgemäßen Schmierölzusammensetzungen Korrosionsinhibitoren (*corrosion inhibitor*) umfassen. Diese werden vielfach unterteilt in Rostschutzadditive (*antirust additive*) und Metallpassivatoren/- desaktivatoren (*metal passivator*/*desactivator*). Als Rostschutzadditive können unter anderem Sulfonate, wie zum Beispiel Petroleumsulfonate oder (vielfach überbasische) synthetische Alkylbenzolsulfonate, z.B. Dinonylnaphthensulfonat; Carbonsäurederivate, wie zum Beispiel Lanolin (Wollfett), oxidierte Paraffine, Zinknaphthenate, akylierte Succinsäuren, 4-Nonylphenoxy-essigsäure, Amide und Imide (N-Acylsarcosin, Imidazolinderivate); Amin-neutralisierte Mono- und Dialkylphosphorsäureester; Morpholin; Dicycylohexylamin oder Diethanolamin eingesetzt werden. Zu den Metallpassivatoren/-desaktivatoren zählen unter anderem Benzotriazol, Tolyltriazol, 2-Mercaptobenzothiazol, Dialkyl-2,5-dimercapto-1,3,4-thiadiazol; N,N'-Disalicylidenethylendiamin, N,N'-Disalicylidenpropylendiamin; Zinkdialkyldithiophosphate und Dialkyldithiocarbamate.

Eine weitere bevorzugte Gruppe von Additiven stellen Antioxidationsmittel (*antioxidant*) dar. Zu den Antioxidationsmittel gehören beispielsweise Phenole, wie zum Beispiel 2,6-Di-tert-butyl-phenol (2,6-DTB), butyliertes Hydroxytoluol (BHT), 2,6-Di-tert-butyl-4-methylphenol, 4,4'-Methylen-bis(2,6-di-tert-butylphenol); aromatische Amine, insbesondere alkylierte Diphenylamine, N-Phenyl-1-naphthylamin (PNA), polymeres 2,2,4-Trimethyldihydrochinon (TMQ); Verbindungen enthaltend Schwefel und Phosphor, wie zum Beispiel Metalldithiophospate, z.B. Zinkdithiophosphate (ZnDTP), "OOS-Triester" = Reaktionsprodukte von Dithiophosphorsäure mit aktivierten Doppelbindungen aus Olefinen, Cyclopentadien, Norbornadien, alpha-Pinen, Polybuten, Acrylsäureestern, Maleinsäureestern (aschefrei bei Verbrennung); Organoschwefelverbindungen, wie zum Beispiel Dialkylsulfide, Diarylsulfide, Polysulfide, modifizierte Thiole, Thiophenderivate, Xanthate, Thioglycole, Thioaldehyde, Schwefel-enthaltende Carbonsäuren; heterocyclische Schwefel/Stickstoff-Verbindungen, insbesondere Dialkyldimercaptothiadiazole, 2-Mercaptobenzimidazole; Zink- und Methylen-bis(dialkyldithiocarbamat); Organophosphorverbindungen, wie zum Beispiel Triaryl- und Trialkylphosphite; Organokupferverbindungen sowie überbasische Calcium- und Magnesium-basierte Phenolate und Salicylate.

Zu den bevorzugten Verschleißschutz- (*antiwear AW*) und Extremdruckadditiven (*extreme pressure EP*) gehören unter anderem Phosphorverbindungen, wie zum Beispiel Trialkylphosphate, Triarylphosphate, z.B. Tricresylphosphat, Amin-neutralisierte Mono- und Dialkylphosphorsäureester, Ethoxylierte Mono- und Dialkylphosphorsäureester, Phosphite, Phosphonate, Phosphine; Verbindungen mit Schwefel und Phosphor, wie zum Beispiel Metalldithiophospate, z.B. Zink-C₃₋₁₂dialkyl-dithiophosphate (ZnDTP), Ammonium-, Antimon-, Molybdän-, Bleidialkyldithiophosphate, "OOS-Triester" = Reaktionsprodukte von Dithiophosphorsäure mit aktivierten Doppelbindungen aus Olefinen, Cyclopentadien, Norbornadien, alpha-Pinen, Polybuten, Acrylsäureestern, Maleinsäureestern, Triphenylphosphorothionat (TPPT); Verbindungen mit Schwefel und Stickstoff, wie zum Beispiel Zink-bis(amyldithiocarbamat) oder Methylen-bis(di-n-butyldithiocarbamat); Schwefelverbindungen mit elementarem Schwefel sowie H₂S geschwefelte Kohlenwasserstoffe (Diisobutylen, Terpen); geschwefelte Glyceride und Fettsäureester; überbasische Sulfonate; Chlorverbindungen oder Feststoffe, wie Graphit oder Molybdändisulfid.

Eine weitere bevorzugte Gruppe von Additiven stellen Reibwertveränderer (*friction modifier*) dar. Als Reibwertveränderer können unter anderem mechanisch wirksame Verbindungen, wie zum Beispiel Molybdändisulfid, Graphit (auch fluoriert), Poly(trifluorethylen), Polyamid, Polyimid; Adsorptionsschichten bildende Verbindungen, wie zum Beispiel langkettige Carbonsäuren, Fettsäureester, Ether, Alkohole, Amine, Amide, Imide; Verbindungen, die durch tribochemische Reaktionen Schichten bilden, wie zum Beispiel gesättigte Fettsäuren, Phosphorsäure und Thiophosphorsäureester, Xanthogenate, geschwefelte Fettsäuren; Verbindungen, die polymerartige Schichten bilden, wie zum Beispiel ethoxylierte Dicarbonsäureteilester, Dialkylphthalsäureester, Methacrylate, ungesättigte Fettsäuren, geschwefelte Olefine oder organometallische Verbindungen, wie zum Beispiel Molybdänverbindungen (Molybdändithiophosphate und Molybdändithiocarbamate MoDTC) und ihre Kombinationen mit ZnDTP, Kupfer-haltige organische Verbindungen eingesetzt werden.

Einige der zuvor dargestellten Additive können multiple Funktionen erfüllen. ZnDTP z.B. ist primär ein Verschleißschutzadditiv und Extremdruckadditiv, hat aber auch den Charakter eines Antioxidationsmittels und Korrosionsinhibitors (hier: Metallpassivator/-desaktivator).

Die zuvor dargelegten Additive sind ausführlicher unter anderem in T. Mang, W. Dresel (eds.): "Lubricants and Lubrication", Wiley-VCH, Weinheim 2001; J. Bartz: "Additive für Schmierstoffe", Expert-Verlag, Renningen-Malmsheim 1994; R.M. Mortier, S.T. Orszulik (eds.): "Chemistry and Technology of Lubricants", Blackie Academic & Professional, London, 2nd ed. 1997 dargelegt.

Bevorzugte Schmierölzusammensetzungen weisen eine gemäß ASTM D 445 bei 40°C gemessenen Viskosität im Bereich von 10 bis 120 mm²/s, besonders bevorzugt im Bereich von 20 bis 100 mm²/s auf. Die bei 100°C gemessene kinematische Viskosität KV₁₀₀ beträgt vorzugsweise mindestens 3,5 mm²/s, besonders bevorzugt mindestens 4,0 mm²/s und ganz besonders bevorzugt mindestens 4,5 mm²/s.

Gemäß einem besonderen Aspekt der vorliegenden Erfindung weisen bevorzugte Schmierölzusammensetzung einen gemäß ASTM D 2270 bestimmten Viskositätsindex im Bereich von 100 bis 400, besonders bevorzugt im Bereich 125 bis 325 und ganz besonders bevorzugt im Bereich von 150 bis 250 auf.

Zweckmäßig sind Schmierölzusammensetzungen, die einen PSSI nach DIN 51350-6 (20h KRL, Kegelrollenlager) kleiner oder gleich 100 aufweisen. Besonders bevorzugt ist der PSSI kleiner oder gleich 65, insbesondere bevorzugt kleiner oder gleich 25.

Die vorliegenden Schmierölzusammensetzungen können insbesondere als Getriebeöl, Motoröl oder Hydrauliköl eingesetzt werden. Überraschende Vorteile lassen sich insbesondere bei Verwendung der vorliegenden Schmiermitteln in Handschalt- (*manual*)*,* automatisierten Handschalt- (*automated manual*), Doppelkupplungs- (*double clutch*) bzw. Direktschaltgetrieben (DSG), Automatik- (*automatic*) und stufenlosen Getrieben (*continuous variable transmission* CVC) erzielen. Weiterhin können die vorliegenden Schmiermittel insbesondere in Verteilergetrieben (*transfercase*) und Achs- (*axle*) bzw. Differentialgetrieben (*differential*) eingesetzt werden.

Die vorliegenden Estergruppen-umfassenden Polymere können weiterhin als Antifatigue-Additiv in Schmiermitteln dienen. Überraschend konnte festgestellt werden, dass diese Additive einer Materialermüdung entgegenwirken, so dass die Lebensdauer von Getrieben, Motoren oder Hydrauliksystemen erhöht werden kann. Dieser Befund kann durch verschiedene Verfahren festgestellt werden. Die Bestimmung der Ermüdungsdauer (Grübchentragfähigkeit) der Schmierölformulierungen kann sowohl nach Methoden für Verzahnungen als auch für Wälzlager erfolgen. Die folgenden Methoden decken einen breiten Bereich an Hertz'schen Pressungen ab.

Die Ermüdungsdauer (Anzahl Umdrehungen) kann beispielsweise auf einem nach DIN 51350-1 genormten Vier-Kugel-Apparat (VKA, *four-ball apparatus*) bestimmt werden, bei dem eine rotierende Kugel unter Last auf drei gleichartige ebenfalls rotierende Kugeln gepresst wird. Es findet Prüfvorschrift VW-PV-1444 der Volkswagen AG Anwendung ("Grübchenfestigkeit von Bauteilen mit Wälzreibung - Pittingtest", VW-PV-1444, Volkswagen AG).
Die Messtemperatur ist 120°C. Mit einer Last von 4.8kN und einer Rotationsgeschwindigkeit von 4000rpm ergibt sich eine Geschwindigkeit im Wälzpunkt (*entrainment speed*) von 5.684m/s bei einer maximalen Hertz'schen Pressung von 7.67GPa. Ermüdung tritt ein, sobald ein Beschleunigungssensor Schwingungen im Frequenzband der Überrollfrequenzen der Prüfkörper größer als 0.25*g* (Erdbeschleunigung *g*=9.81m/s²) registriert. Dies deutet typischerweise auf Grübchen der Abrollbahn von 1-2mm Durchmesser hin. Dieser Test wird nachfolgend als VKA-Test bezeichnet.

Des Weiteren kann die Ermüdung über einen FAG FE8-Versuch bestimmt werden. Hierzu kann das Wälzlagerschmierstoff-Prüfgerät FE8 nach DIN 51819-1 der FAG (Schaeffler KG, Schweinfurt) eingesetzt werden. Hier wird die Ermüdungsdauer (in Stunden) von je zwei gemeinsam montierten Axialzylinderrollenlagern entsprechend Prüfvorschrift VW-PV-1483 ("Prüfung der Grübchentragfähigkeit in Wälzlagern - Ermüdungstest", VW-PV-1483, Volkswagen AG, Entwurf September 2006; Bestandteil der Ölnormen VW TL52512/2005 für Handschaltgetriebe und VW TL52182/2005 für Doppelkupplungsgetriebe der Volkswagen AG) untersucht. Es werden Lagerscheiben mit einer arithmetischen Rauhigkeit von 0.1-0.3µm eingesetzt.

Gemessen wird bei 120°C. Mit einer Last von 60kN und einer Rotationsgeschwindigkeit von 500rpm ergibt sich eine Geschwindigkeit im Wälzpunkt von 1.885m/s bei einer maximalen Hertz'schen Pressung von 1.445GPa. Ermüdung tritt ein, sobald das Drehmoment (d.h. das Reibmoment) eine Erhöhung um mehr als 10% aufweist, d.h. auch bei Ermüdung nur eines Axialzylinderrollenlagers.

Prinzipiell kann das Wälzlagerschmierstoff-Prüfgerät FE8 auch nach der schärferen Methode ZF-702-232/2003 der ZF Friedrichshafen AG gefahren werden (vgl. "ZF Bearing Pitting Test", ZF-702-232, ZF Friedrichshafen AG, 2004).

Auch die in der Industrie weit verbreite Unisteel Maschine nach IP 305/79 auf Basis eines Kugellagers mit 11 Kugeln (in Abwandlungen auch nur mit 3 Kugeln) bietet eine Methode zur Bestimmung der Ermüdungsdauer von Lagern.

Weiterhin kann eine Zahnrad-Verspannungs-Prüfmaschine der FZG (Forschungsstelle für Zahnräder und Getriebebau der Technischen Universität München) nach DIN 51354-1 genutzt werden. Auf dieser Prüfmaschine wird die Ermüdungsdauer (in Stunden) unter Verwendung von spezifizierten PT-C (*pitting test type C*) Zahnrädern bestimmt. Die Methode ist in FVA Informationsblatt 2/IV beschrieben (vgl. U. Schedl: "FVA-Forschungsvorhaben 2/IV: Pittingtest - Einfluss der Schmierstoffs auf die Grübchenlebensdauer einsatzgehärteter Zahnräder im Einstufen- und Lastkollektivversuch", Forschungsvereinigung Antriebstechnik, Heft 530, Frankfurt 1997; "Pittingtest - Einfluss der Schmierstoffs auf die Grübchenlebensdauer einsatzgehärteter Zahnräder im Einstufen- und Lastkollektivversuch", FVA Informationsblatt 2/IV, Forschungsvereinigung Antriebstechnik, Frankfurt 1997). Gemessen wird bei 120°C. Bei Laststufe 10 (d.h. einem Drehmoment von 373Nm) und einer Rotationsgeschwindigkeit von 1450rpm ergibt sich eine Geschwindigkeit im Wälzpunkt von 5.678m/s bei einer maximalen Hertz'schen Pressung von 1.834GPa. Ermüdung tritt ein beim Beobachten von Grübchen einer Gesamtfläche >=5mm². Diese Methode wird nachfolgend als FZG PT-C 10/120-Untersuchung bezeichnet.

Die Nutzung der weiterentwickelten praxisnahen Prüfverzahnung PTX-C in der FZG Zahnrad-Verspannungs-Prüfmaschine nach DIN 51354-1 führt zu verbesserter Wiederholbarkeit und Vergleichbarkeit der Ermüdungsdauer. Die Methode ist in FVA Information Sheet 371 beschrieben (vgl. T. Radev: "FVA-Forschungsvorhaben 371: Entwicklung eines praxisnahen Pittingtests", Forschungsvereinigung Antriebstechnik, Heft 710, Frankfurt 2003; "Development of a Practice Relevant Pitting Test", FVA Information Sheet 371, Forschungsvereinigung Antriebstechnik, Frankfurt 2006).
Gemessen wird bei 90°C. Bei Laststufe 10 (d.h. einem Drehmoment von 373Nm) und einer Rotationsgeschwindigkeit von 1450rpm ergibt sich eine Geschwindigkeit im Wälzpunkt von 5.678m/s bei einer maximalen Hertz'schen Pressung von 2.240GPa. Ermüdung tritt ein beim Beobachten von Grübchen einer Gesamtfläche >=5mm². Diese Methode wird nachfolgend als FZG PTX-C 10/90-Untersuchung bezeichnet.

Die erfindungsgemäßen Schmiermittel zeigen ausgezeichnete Reibeigenschaften, die bei unterschiedlichsten Bedingungen nachgewiesen werden können. Demgemäß ist auch die Verwendung der Estergruppen-umfassenden Copolymere zur Verbesserung der Reibeigenschaften ein Gegenstand der vorliegenden Erfindung.

Gemäß einem bevorzugten Aspekt der vorliegenden Erfindung können insbesondere die Reibeigenschaften im Bereich der zuvor näher dargelegten "boundary lubrication" verbessert werden. Dieser Bereich ist gekennzeichnet durch einen Oberflächenabstand R der kleiner ist als die Oberflächenrauhigkeit, wobei diese als mittlere Rauheit Ra gegeben ist, die mit taktilen Methoden gemessen werden kann (vgl. DIN EN ISO 4287).
Die ausgezeichneten Reibeigenschaften können unter anderem mittels UTFI (Ultrathin Film Interferometry), MTM (Mini-Traction Machine) oder HFRR (High Frequency Reciprocating Rig) bestimmt werden.

Zur Bestimmung der tribologischen Eigenschaften mittels Ultrathin Film Interferometry (UTFI) wird eine Stahlkugel eingesetzt, die unter Belastung auf einer beschichteten Glasscheibe rollt. Die Veränderung der Filmdicke zwischen Kugel und Scheibe wird per optischer Interferometrie als Funktion der Rollgeschwindigkeit untersucht.

Vorzugsweise können zur Bestimmung der UTFI-Werte folgende Messparameter eingesetzt werden: Young-Modul (AISI 52100 Stahl) = 210GPa, Young-Modul (Glas) = 75GPa, *root mean square* RMS Rauhigkeit (Stahl) = 10-13nm, RMS Rauhigkeit (Glas) = 3nm, Belastung = 20N, resultierende maximale Hertz'sche Pressung = 0.54GPa, Roll- bzw. Einzugsgeschwindigkeit (*entrainment speed*) = 0.005-1.5m/s, Temperatur = 120°C.

Zur Bestimmung der tribologischen Eigenschaften mittels Mini-Traction Machine (MTM) wird eine Stahlkugel von 19mm Durchmesser eingesetzt, die auf einer polierten Stahlscheibe gleitet bzw. rollt. Kugel und Scheibe werden unabhängig voneinander über Elektromotoren angetrieben, so dass unterschiedliche Gleit/Roll-Verhältnisse (*sliding*/*rolling ratio* SRR) einstellbar sind. Der Reibungskoeffizient wird als Funktion der mittleren Rollgeschwindigkeit untersucht. Als Ergebnis eines Reibexperiments wurden Stribeck-Kurven erhalten, aus der die Reibungskoeffizienten erhalten werden.

Vorzugsweise können zur Bestimmung der MTM-Werte folgende Messparameter eingesetzt werden: Young-Modul (AISI 52100 Stahl) = 210GPa, Rauhigkeit (Stahlkugel) = 10-13nm, Rauhigkeit (Stahlscheibe) = 25-30nm, Belastung = 30N, resultierende maximale Hertz'sche Pressung = 0.93GPa, SSR=50%, mittlere Rollgeschwindigkeit bzw. Einzugsgeschwindigkeit = 0.005-2.5m/s, Temperatur = 120°C.

Zur Bestimmung der tribologischen Eigenschaften mittels High Frequency Reciprocating Rig (HFRR) wird eine Stahlkugel von 6mm Durchmesser in einer Spannvorrichtung fixiert und unter Belastung auf die Oberfläche einer Stahlscheibe von 10mm Durchmesser gepresst. Der Reibungskoeffizient wird kontinuierlich aufgezeichnet, und der Verschleißkerbendurchmesser am Ende des Experiments bestimmt.

Vorzugsweise können zur Bestimmung der HFRR-Werte folgende Messparameter eingesetzt werden: Young-Modul (AISI 52100 Stahlkugel) = 210GPa, harte VPN 800 Stahlscheiben statt typischer für Kraftstoffuntersuchungen verwendeter weicher Scheiben, Belastung = 4N, Ausschlag = 2mm, Frequenz = 20s⁻¹, Reibzeit = 75min, Temperatur = 120°C.
Hierbei zeigen die erfindungsgemäßen Polymere eine überraschend große Verbesserung der HFRR-Werte. Nach einer Messung von 75 Minuten mit den zuvor dargelegten Parametern zeigen bevorzugte Schmiermittel einen relativen Verschleiß von höchstens 0,8, bevorzugt höchstens 0,75 und besonders bevorzugt höchstens 0,65. Der relative Verschleiß bezieht sich hierbei auf ein vergleichbares Schmiermittel ohne den Zusatz der erfindungsgemäßen Additive. Der absolute Verschleiß, gemessen als Verschleißkerbendurchmesser, beträgt vorzugsweise höchstens 280 µm, insbesondere höchstens 260 µm, besonders bevorzugt höchstens 240 µm und ganz besonders bevorzugt höchstens 220 µm. Weiterhin zeigen bevorzugte Schmiermittel gemäß dem HFRR-Versuch einen Reibwert von höchstens 0,2, insbesondere höchstens 0,15, besonders bevorzugt höchstens 0,10. Bezogen auf ein vergleichbares Schmiermittel ohne den Zusatz beträgt der relative Reibwert vorzugsweise höchstens 0,8, bevorzugt höchstens 0,75 und besonders bevorzugt höchstens 0,65 (relative Reibwert = Reibwert mit Copolymer / Reibwert Referenzöl).

Demgemäß ist auch die Verwendung der Estergruppen-umfassenden Copolymere zur Verringerung des Verschleißes ein Gegenstand der vorliegenden Erfindung.

Von besonderem Interesse sind des Weiteren Schmierölzusammensetzungen, die eine bei 150°C gemessene Hochscherviskosität HTHS von mindestens 1,6 mPas, besonders bevorzugt mindestens 2,0 mPas aufweisen. Die bei 100°C gemessene Hochscherviskosität HTHS beträgt vorzugsweise höchstens 10 mPas, besonders bevorzugt höchstens 7 mPas und ganz besonders bevorzugt höchstens 5 mPas. Die Differenz der Hochscherviskositäten HTHS, die bei 100°C und 150°C gemessen werden, HTHS₁₀₀ - HTHS₁₅₀ beträgt vorzugsweise höchstens 4 mPas, besonders bevorzugt höchstens 3,3 mPas und ganz besonders bevorzugt höchstens 2,5 mPas. Das Verhältnis von Hochscherviskosität bei 100°C HTHS₁₀₀ zu Hochscherviskosität bei 150°C HTHS₁₅₀, HTHS₁₀₀/HTHS₁₅₀ beträgt vorzugsweise höchstens 2,0, besonders bevorzugt höchstens 1,9. Die Hochscherviskosität HTHS kann bei der jeweiligen Temperatur gemäß ASTM D4683 gemessen werden.

Nachfolgend soll die vorliegende Erfindung anhand von Beispielen und Vergleichsbeispielen erläutert werden, ohne dass hierdurch eine Beschränkung erfolgen soll.

### Beispiel 1

In einem Reaktionskolben, der mit Heizpilz, Innentemperaturregelung, Rührer, Stickstoffeinleitung und Kühler ausgestattet ist, werden 945 g 12/15-Alkylmethacrylat und 42 g Styrol vorgelegt. Die Mischung wird mit Trockeneis gründlich entgast und unter Einleitung von Stickstoff auf 80°C aufgeheizt. Während der Aufheizphase wird bei 60°C die Polymerisation durch Zugabe von 19 g Initiator (BlocBuilder® MA) gestartet. Im weiteren Verlauf wird der Umsatz des 12/15-Alkylmethacrylats über den Brechungsindex verfolgt. Nach ca. 4 h wird bei einem Umsatz von 90% die entgaste Mischung aus 52 g Hydroxyethylmethacrylat (HEMA) und 10 g Styrol zugegeben. Die Reaktionsmischung wird für weitere 16 Stunden bei 80°C nachgerührt.
Das mittels GPC bestimmte gewichtsgemittelte Molekulargewicht des Polymeren betrug ca. 25000 g/mol.

Die Eigenschaften des Polymeren wurden in einem HFRR-Versuch untersucht. Hierzu wurde eine Schmierölformulierung unter Verwendung eines Gruppe-III-Öls (NexBase 3030) herstellt, wobei die kinematische Viskosität bei 120 °C auf ca. 4,73 mm²/s eingestellt wurde. Die Konzentration des Polymeren betrug 13,3 Gew.-%. Der gemäß HFRR bestimmte Reibkoeffizient betrug 0,132. Ein Gruppe-III-Referenzöl aus Nexbase 3080 + Nexbase 3060 mit einer kinematischen Visvosität bei 120 °C von 4,74 mm²/s zeigte einen Reibkoeffizienten von ca. 0,21.

### Beispiel 2

Das Beispiel 1 wird im Wesentlichen wiederholt, wobei jedoch zur Herstellung des unpolaren Segments P 914 g 12/15-Alkylmethacrylat und 32 g Styrol vorgelegt werden. Nach Erreichen von 90% Umsatz werden dann, zur Herstellung des polaren Segments D, die entgaste Mischung aus 84 g N-(2-Methacryloyloxyethyl)ethylen-harnstoff (EUMA) und 21 g Styrol zugegeben und die Reaktionsmischung ebenfalls bei 80°C 16 Stunden nachgerührt.
Das mittels GPC bestimmte gewichtsgemittelte Molekulargewicht des Polymeren betrug ca. 25000 g/mol.

Die Eigenschaften des Polymeren wurden in einem HFRR-Versuch untersucht. Hierzu wurde eine Schmierölformulierung unter Verwendung eines Gruppe-III-Öls (NexBase 3030) herstellt, wobei die kinematische Viskosität bei 120 °C auf ca. 4,70 mm²/s eingestellt wurde. Die Konzentration des Polymeren betrug 13,2 Gew.-%. Der gemäß HFRR bestimmte Reibkoeffizient betrug 0,096. Ein Gruppe-III-Referenzöl aus Nexbase 3080 + Nexbase 3060 mit einer kinematischen Visvosität bei 120 °C von 4,74 mm²/s zeigte einen Reibkoeffizienten von ca. 0,21.

### Beispiel 3

Das Beispiel 1 wird im Wesentlichen wiederholt, wobei jedoch zur Herstellung des unpolaren Segments P 914 g 12/15-Alkylmethacrylat und 42 g Styrol vorgelegt werden. Nach Erreichen von 90% Umsatz werden dann, zur Herstellung des polaren Segments D, die entgaste Mischung aus 84 g Acetoacetoxyethylmethacrylat (AcAcEMA) und 11 g Styrol zugegeben und die Reaktionsmischung ebenfalls bei 80°C 16 Stunden nachgerührt.
Das mittels GPC bestimmte gewichtsgemittelte Molekulargewicht des Polymeren betrug ca. 25000 g/mol.

Die Eigenschaften des Polymeren wurden in einem HFRR-Versuch untersucht. Hierzu wurde eine Schmierölformulierung unter Verwendung eines Gruppe-III-Öls (NexBase 3030) herstellt, wobei die kinematische Viskosität bei 120 °C auf ca. 4,74 mm²/s eingestellt wurde. Die Konzentration des Polymeren betrug 14,8 Gew.-%. Der gemäß HFRR bestimmte Reibkoeffizient betrug 0,085. Ein Gruppe-III-Referenzöl aus Nexbase 3080 + Nexbase 3060 mit einer kinematischen Viskosität bei 120 °C von 4,74 mm²/s zeigte einen Reibkoeffizienten von ca. 0,21. Weiterhin zeigte das Copolymer einen absoluten Verschleiß von ca. 208 µm, wohingegen das Referenzöl einen Verschleiß von ca. 334 µm zeigte.

### Vergleichsbeispiel 1

In einem 2l Reaktionskolben, der mit Heizpilz, Innentemperaturregelung, Rührer, Stickstoffeinleitung und Kühler ausgestattet ist, werden 900 g isoC12-C15-Alkylmethacrylat, 225 g Butylacetat und 6,75 g Cumyldithiobenzoat (Initiator für RAFT) vorgelegt. Die Mischung wird mit Trockeneis gründlich entgast und unter Einleitung von Stickstoff auf 90°C aufgeheizt. Nach Erreichen der Reaktionstemperatur wird die Polymerisation durch Zugabe von 1,8 g tBPO (tert-Butylper-2-ethylhexanoat) gestartet. Nach vier und acht Stunden Reaktionszeit werden jeweils 0,9 g tBPO zugegeben und anschließend noch fünfzehn Stunden nachgerührt.
Danach erfolgt die Zugabe von 71,9 g N-(2-Methacryloyloxyethyl)ethylenharnstoff (EUMA) in 300 g Butylacetat und 0,97 g tBPO. Nach weiteren vier Stunden wird die Mischung mit 647,9g Öl verdünnt. Anschließend wird die Mischung am Rotationsverdampfer bei 120°C und einem Endvakuum von 12 mbar entgast.
Das mittels GPC bestimmte gewichtsgemittelte Molekulargewicht des Polymeren betrug ca. 75000 g/mol.

Die Eigenschaften des Polymeren wurden in einem HFRR-Versuch untersucht. Hierzu wurde eine Schmierölformulierung unter Verwendung eines Gruppe-l-Öls (Enerpar 11 = 150N) herstellt, wobei die kinematische Viskosität bei 120 °C auf ca. 9,21 mm²/s eingestellt wurde. Die Konzentration des Polymeren betrug 7,0 Gew.-%. Der gemäß HFRR bestimmte Reibkoeffizient betrug 0,18. Ein Gruppe-I-Referenzöl aus Ergenol BS + Esso 600N mit einer kinematische Viskosität bei 120 °C von ca. 9,24 mm²/s zeigte einen Reibkoeffizienten von ca. 0,20.

### Vergleichsbeispiel 2

In einem 2l Reaktionskolben, der mit Heizpilz, Innentemperaturregelung, Rührer, Stickstoffeinleitung und Kühler ausgestattet ist, werden 900 g isoC12-C15-Alkylmethacrylat, 225 g Butylacetat und 6,75 g Cumyldithiobenzoat (Initiator für RAFT) vorgelegt. Die Mischung wird mit Trockeneis gründlich entgast und unter Einleitung von Stickstoff auf 85°C aufgeheizt. Nach Erreichen der Reaktionstemperatur wird die Polymerisation durch Zugabe von 1,8 g tBPO (tert-Butylper-2-ethylhexanoat) gestartet. Nach fünf Stunden Reaktionszeit werden 0,9 g tBPO zugegeben. Nach weiteren fünf Stunden Reaktionszeit erfolgt die Zugabe von 78,3 g Acetoacetoxyethylmethacrylat (AcAcEMA) in 300 g Butylacetat und 0,98 g tBPO. Anschließend wird noch dreißig Stunden bei 85°C nachgerührt. Danach wird die Mischung mit 526,8 g Öl verdünnt und am Rotationsverdampfer bei 120°C und einem Endvakuum von 12 mbar entgast.
Das mittels GPC bestimmte gewichtsgemittelte Molekulargewicht des Polymeren betrug ca. 150000 g/mol.

Die Eigenschaften des Polymeren wurden in einem HFRR-Versuch untersucht. Hierzu wurde eine Schmierölformulierung unter Verwendung eines Gruppe-l-Öls (Enerpar 11 = 150N) herstellt, wobei die kinematische Viskosität bei 120 °C auf ca. 9,12 mm²/s eingestellt wurde. Die Konzentration des Polymeren betrug 5,5 Gew.-%. Der gemäß HFRR bestimmte Reibkoeffizient betrug 0,19. Ein Gruppe-I-Referenzöl aus Ergenol BS + Esso 600N mit einer kinematische Viskosität bei 120 °C von ca. 9,24 mm²/s zeigte einen Reibkoeffizienten von ca. 0,20.

## Patentansprüche

1. Estergruppen-umfassendes Copolymer mit mindestens einem unpolaren Segment P und mindestens einem polaren Segment D, wobei das polare Segment D mindestens 8 Wiederholungseinheiten aufweist und der Gewichtsanteil an dispergierenden Wiederholungseinheiten in dem polaren Segment D mindestens 30 % beträgt, bezogen auf das Gewicht des polaren Segments D, und wobei der Gewichtsanteil an dispergierenden Wiederholungseinheiten in dem unpolaren Segment P unterhalb von 20 Gew.-% bezogen auf das Gewicht des unpolaren Segments P liegt, **dadurch gekennzeichnet, dass** das Estergruppen-umfassende Copolymer durch NMP (Nitroxide Mediated Polymerization) erhältlich ist,
wobei das Copolymer Wiederholungseinheiten umfasst, die von Styrol-Monomeren abgeleitet sind, und Wiederholungseinheiten, die von einem Methacrylat abgeleitet sind,
und wobei die dispergierenden Wiederholungseinheiten von einer oder mehreren ethylenisch ungesättigten, polaren Esterverbindungen der Formel (IV) 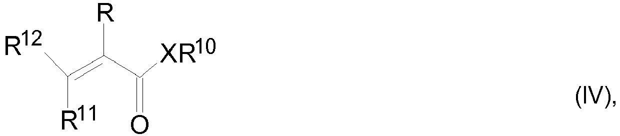 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 40 Kohlenstoffatomen steht, R¹⁰ einen 2 bis 1000 Kohlenstoffatome umfassenden Rest mit mindestens einem Heteroatomen, R¹¹ und R¹² unabhängig Wasserstoff oder eine Gruppe der Formel -COX'R^{10'} darstellen, worin X' Sauerstoff oder eine Aminogruppe der Formel -NH- oder -NR^{a'}-, worin R^{a'} für einen Alkylrest mit 1 bis 40 Kohlenstoffatomen steht, und R^{10'} einen 1 bis 100 Kohlenstoffatome umfassenden Rest darstellt und/oder von heterocyclischen Vinylverbindungen abgeleitet sind.

2. Copolymer gemäß Anspruch 1, **dadurch gekennzeichnet, dass** das Copolymer durch eine mehrstufige Polymerisation erhältlich ist, wobei in der ersten Stufe ein unpolares Segment P und in der letzten Stufe ein polares Segment D hergestellt wird.

3. Copolymer gemäß mindestens einem der vorhergehenden Ansprüche, **dadurch gekennzeichnet, dass** die bei zur Durchführung der NMP eingesetzte, übertragbare Nitroxylradikal-Verbindung mindestens ein Phosphoratom umfasst.

4. Copolymer gemäß mindestens einem der vorhergehenden Ansprüche, **dadurch gekennzeichnet, dass** das Copolymer durch eine mehrstufige Polymerisation erhältlich ist, bei der eine übertragbare Nitroxylradikal-Verbindung mit mindestens einem Phosphoratom eingesetzt wird, wobei die übertragbare Nitroxylradikal-Verbindung mit mindestens einem Phosphoratom am Ende des polaren Segment D lokalisiert ist.

5. Copolymer gemäß mindestens einem der vorhergehenden Ansprüche, **dadurch gekennzeichnet, dass** das Copolymer Wiederholungseinheiten umfasst, die von Styrol-Monomeren abgeleitet sind, und der Anteil an Wiederholungseinheiten, die von Styrol-Monomeren abgeleitet sind, im Bereich von 0,5 bis 10 Gew.-% liegt.

6. Copolymer, gemäß mindestens einem der vorhergehenden Ansprüche, **dadurch gekennzeichnet, dass** das Gewichtsverhältnis der unpolaren Segmente P zu den polaren Segmenten D im Bereich von 100:1 bis 1:1 liegt.

7. Copolymer gemäß mindestens einem der vorhergehenden Ansprüche, **dadurch gekennzeichnet, dass** das unpolare Segment P durch Polymerisation einer Monomerenzusammensetzung erhältlich ist, die
a) 0 bis 40 Gew.-%, bezogen auf das Gewicht der Monomerenzusammensetzung zur Herstellung der unpolaren Segmente, einer oder mehreren ethylenisch ungesättigten Esterverbindungen der Formel (I) 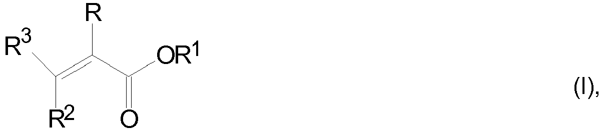 worin R Wasserstoff oder Methyl darstellt, R¹ einen linearen oder verzweigten Alkylrest mit 1 bis 6 Kohlenstoffatomen bedeutet, R² und R³ unabhängig Wasserstoff oder eine Gruppe der Formel -COOR' darstellen, worin R' Wasserstoff oder eine Alkylgruppe mit 1 bis 6 Kohlenstoffatomen bedeutet,
b) 5 bis 100 Gew.-%, bezogen auf das Gewicht der Monomerenzusammensetzung zur Herstellung der unpolaren Segmente, einer oder mehreren ethylenisch ungesättigten Esterverbindungen der Formel (II) 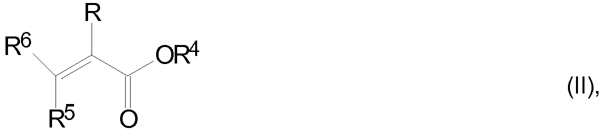 worin R Wasserstoff oder Methyl darstellt, R⁴ einen linearen oder verzweigten Alkylrest mit 7 bis 15 Kohlenstoffatomen bedeutet, R⁵ und R⁶ unabhängig Wasserstoff oder eine Gruppe der Formel -COOR" darstellen, worin R" Wasserstoff oder eine Alkylgruppe mit 7 bis 15 Kohlenstoffatomen bedeutet,
c) 0 bis 80 Gew.-%, bezogen auf das Gewicht der Monomerenzusammensetzung zur Herstellung der unpolaren Segmente, einer oder mehreren ethylenisch ungesättigten Esterverbindungen der Formel (III) 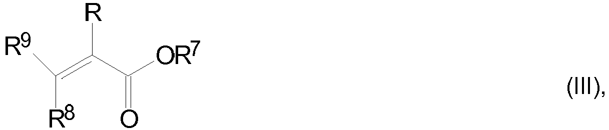 worin R Wasserstoff oder Methyl darstellt, R⁷ einen linearen oder verzweigten Alkylrest mit 16 bis 30 Kohlenstoffatomen bedeutet, R⁸ und R⁹ unabhängig Wasserstoff oder eine Gruppe der Formel -COOR''' darstellen, worin R''' Wasserstoff oder eine Alkylgruppe mit 16 bis 30 Kohlenstoffatomen bedeutet,
d) 0 bis 50 Gew.-%, bezogen auf das Gewicht der Monomerenzusammensetzung zur Herstellung der hydrophoben Segmente, Comonomer,
umfasst.

8. Copolymer gemäß mindestens einem der vorhergehenden Ansprüche, **dadurch gekennzeichnet, dass** der Rest R¹⁰ in mindestens einer der Esterverbindungen gemäß Formel (IV) mindestens eine Gruppe der Formel -CO- umfasst.

9. Copolymer gemäß Anspruch 8, **dadurch gekennzeichnet, dass** der Rest R¹⁰ in mindestens einer der Esterverbindungen gemäß Formel (IV) mindestens 2 Gruppen der Formel -CO- umfasst.

10. Copolymer gemäß Anspruch 9, **dadurch gekennzeichnet, dass** die mindestens zwei Gruppen der Formel -CO- über höchstens 4 Atome miteinander verbunden sind.

11. Copolymer gemäß mindestens einem der vorhergehenden Ansprüche, **dadurch gekennzeichnet, dass** mindestens ein polares Segment dispergierende Wiederholungseinheiten aufweist, die von 2-Acetoacetoxyethyl(meth)acrylat abgeleitet sind.

12. Schmiermittel, umfassend mindestens ein Copolymer gemäß mindestens einem der vorhergehenden Ansprüche 1 bis 11.

13. Schmiermittel gemäß Anspruch 12, **dadurch gekennzeichnet, dass** das Schmiermittel mindestens 10 Gew.-% Gruppe III Öl umfasst.

14. Verwendung eines Copolymers gemäß mindestens einem der vorhergehenden Ansprüche 1 bis 11 zur Verbesserung des Reibwertes.

15. Verwendung gemäß Anspruch 14, **dadurch gekennzeichnet, dass** der Reibwert im Bereich der "boundary lubrication" verbessert wird.

16. Verwendung gemäß Anspruch 14 oder 15, **dadurch gekennzeichnet, dass** der HFRR-Wert (High Frequency Reciprocating Rig) verbessert wird.

17. Verwendung eines Copolymers gemäß mindestens einem der vorhergehenden Ansprüche 1 bis 11 zur Verringerung des Verschleißes.

## Claims

1. A copolymer comprising ester groups and having at least one nonpolar segment P and at least one polar segment D, the polar segment D having at least 8 repeat units and the proportion by weight of dispersing repeat units in the polar segment D being at least 30%, based on the weight of the polar segment D, and the nonpolar segment P having a proportion by weight of dispersing repeat units of less than 20% by weight, based on the weight of the nonpolar segment P, **characterized in that** the copolymer comprising ester groups is obtainable by NMP (Nitroxide Mediated Polymerization), wherein the copolymer comprises repeat units derived from styrene monomers and repeat units derived from a methacrylate, and
wherein the dispersing repeat units are derived from one or more ethylenically unsaturated, polar ester compounds of the formula (IV) 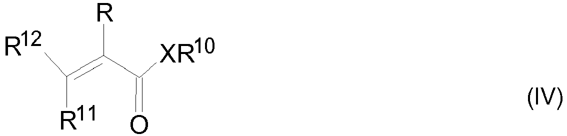 in which R is hydrogen or methyl, X is oxygen, sulfur or an amino group of the formula -NH-or-NR^{a}- in which R^{a} is an alkyl radical having 1 to 40 carbon atoms, R¹⁰ is a radical which comprises 2 to 1000 carbon atoms and has at least one heteroatom, R¹¹ and R¹² are each independently hydrogen or a group of the formula - COX'R^{10'} in which X' is oxygen or an amino group of the formula -NH- or-NR^{a'}- in which R^{a'} is an alkyl radical having 1 to 40 carbon atoms, and R^{10'} is a radical comprising 1 to 100 carbon atoms, and/or from heterocyclic vinyl compounds.

2. The copolymer according to claim 1, **characterized in that** the copolymer is obtainable by a multistage polymerization, with preparation of a nonpolar segment P in the first stage and of a polar segment D in the last stage.

3. The copolymer according to any one of the previous claims, **characterized in that** the transferrable nitroxyl radical compound used in the performance of the NMP comprises at least one phosphorus atom.

4. The copolymer according to any one of the previous claims, **characterized in that** the copolymer is obtainable by a multistage polymerization in which a transferrable nitroxyl radical compound having at least one phosphorus atom is used, the transferrable nitroxyl radical compound having at least one phosphorus atom being localized at the end of the polar segment D.

5. The copolymer according to any one of the previous claims, **characterized in that** the copolymer comprises repeat units derived from styrene monomers, and the proportion of repeat units derived from styrene monomers is in the range from 0.5 to 10% by weight.

6. The copolymer according to any one of the previous claims, **characterized in that** the weight ratio of the nonpolar segments P to the polar segments D is in the range from 100:1 to 1:1.

7. The copolymer according to any one of the previous claims, **characterized in that** the nonpolar segment P is obtainable by polymerization of a monomer composition comprising
a) 0 to 40% by weight, based on the weight of the monomer composition for preparation of the nonpolar segments, of one or more ethylenically unsaturated ester compounds of the formula (I) 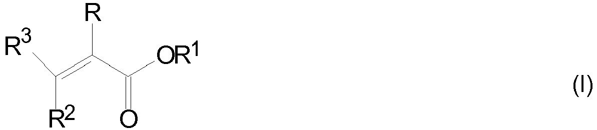 in which R is hydrogen or methyl, R¹ is a linear or branched alkyl radical having 1 to 6 carbon atoms, R² and R³ are each independently hydrogen or a group of the formula -COOR' in which R' is hydrogen or an alkyl group having 1 to 6 carbon atoms,
b) 5 to 100% by weight, based on the weight of the monomer composition for preparation of the nonpolar segments, of one or more ethylenically unsaturated ester compounds of the formula (II) 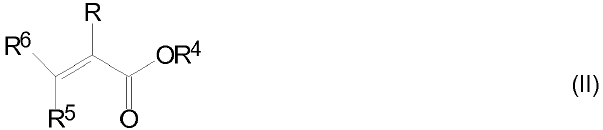 in which R is hydrogen or methyl, R⁴ is a linear or branched alkyl radical having 7 to 15 carbon atoms, R⁵ and R⁶ are each independently hydrogen or a group of the formula -COOR" in which R" is hydrogen or an alkyl group having 7 to 15 carbon atoms,
c) 0 to 80% by weight, based on the weight of the monomer composition for preparation of the nonpolar segments, of one or more ethylenically unsaturated ester compounds of the formula (III) 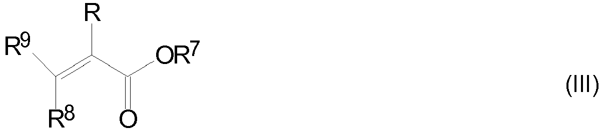 in which R is hydrogen or methyl, R⁷ is a linear or branched alkyl radical having 16 to 30 carbon atoms, R⁸ and R⁹ are each independently hydrogen or a group of the formula -COOR''' in which R''' is hydrogen or an alkyl group having 16 to 30 carbon atoms,
d) 0 to 50% by weight, based on the weight of the monomer composition for preparation of the hydrophobic segments, of comonomer.

8. The copolymer according to any one of the previous claims, **characterized in that** the R¹⁰ radical in at least one of the ester compounds of the formula (IV) comprises at least one group of the formula -CO-.

9. The copolymer according to claim 8, **characterized in that** the R¹⁰ radical in at least one of the ester compounds of the formula (IV) comprises at least 2 groups of the formula -CO-.

10. The copolymer according to claim 9, **characterized in that** the at least two groups of the formula -CO- are bonded to one another via not more than 4 atoms.

11. The copolymer according to any one of the previous claims, **characterized in that** at least one polar segment has dispersing repeat units derived from 2-acetoacetoxyethyl (meth)acrylate.

12. A lubricant comprising at least one copolymer according to any one of claims 1 to 11.

13. The lubricant according to claim 12, **characterized in that** the lubricant comprises at least 10% by weight of group III oil.

14. Use of a copolymer according to any one of claims 1 to 11 for improving the coefficient of friction.

15. The use according to claim 14, **characterized in that** the coefficient of friction is improved in the boundary lubrication range.

16. The use according to claim 14 or 15, **characterized in that** the HFRR (High Frequency Reciprocating Rig) value is improved.

17. Use of a copolymer according to any one of claims 1 to 11 for reducing wear.

## Revendications

1. Copolymère comprenant des groupes ester, comprenant au moins un segment apolaire P et au moins un segment polaire D, le segment polaire D comprenant au moins 8 unités de répétition et la proportion en poids d'unités de répétition dispersantes dans le segment polaire D étant d'au moins 30 %, par rapport au poids du segment polaire D, et la proportion en poids d'unités de répétition dispersantes dans le segment apolaire P étant inférieure à 20 % en poids, par rapport au poids du segment apolaire P, **caractérisé en ce que** le copolymère comprenant des groupes ester peut être obtenu par NMP (polymérisation médiée par nitroxyde),
le copolymère comprenant des unités de répétition qui sont dérivées de monomères de styrène et des unités de répétition qui sont dérivées d'un méthacrylate,
et les unités de répétition dispersantes étant dérivées d'un ou de plusieurs composés d'ester polaires éthyléniquement insaturés de formule (IV) 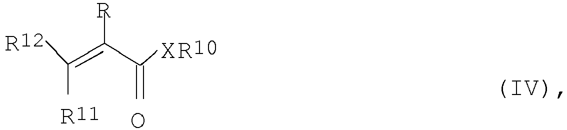 dans laquelle R représente hydrogène ou méthyle, X représente oxygène, soufre ou un groupe amino de formule -NH- ou -NR^{a}-, R^{a} représentant un radical alkyle de 1 à 40 atomes de carbone, R¹⁰ représente un radical comprenant 2 à 1 000 atomes de carbone qui comprend au moins un hétéroatome, R¹¹ et R¹² représentent indépendamment l'hydrogène ou un groupe de formule -COX'R^{10'}, X' représentant l'oxygène ou un groupe amino de formule - NH- ou -NR^{a'}-, R^{a'} représentant un radical alkyle de 1 à 40 atomes de carbone, et R^{10'} représentant un radical comprenant 1 à 100 atomes de carbone, et/ou de composés de vinyle hétérocycliques.

2. Copolymère selon la revendication 1, **caractérisé en ce que** le copolymère peut être obtenu par une polymérisation à plusieurs étapes, selon laquelle un segment apolaire P est fabriqué lors de la première étape et un segment polaire D lors de la dernière étape.

3. Copolymère selon au moins l'une quelconque des revendications précédentes, **caractérisé en ce que** le composé à radical nitroxyle transférable utilisé lors de la réalisation de la NMP comprend au moins un atome de phosphore.

4. Copolymère selon au moins l'une quelconque des revendications précédentes, **caractérisé en ce que** le copolymère peut être obtenu par une polymérisation à plusieurs étapes, lors de laquelle un composé à radical nitroxyle transférable contenant au moins un atome de phosphore est utilisé, le composé à radical nitroxyle transférable contenant au moins un atome de phosphore étant localisé à l'extrémité du segment polaire D.

5. Copolymère selon au moins l'une quelconque des revendications précédentes, **caractérisé en ce que** le copolymère comprend des unités de répétition qui sont dérivées de monomères de styrène et la proportion d'unités de répétition qui sont dérivées de monomères de styrène se situe dans la plage allant de 0,5 à 10 % en poids.

6. Copolymère selon au moins l'une quelconque des revendications précédentes, **caractérisé en ce que** le rapport en poids entre les segments apolaires P et les segments polaires D se situe dans la plage allant de 100:1 à 1:1.

7. Copolymère selon au moins l'une quelconque des revendications précédentes, **caractérisé en ce que** le segment apolaire P peut être obtenu par polymérisation d'une composition de monomères qui comprend :
a) 0 à 40 % en poids, par rapport au poids de la composition de monomères pour la fabrication des segments apolaires, d'un ou de plusieurs composés d'ester éthyléniquement insaturés de formule (I) 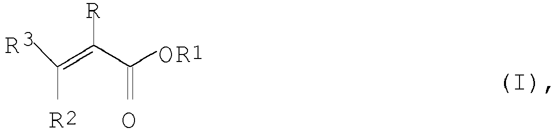 dans laquelle R représente hydrogène ou méthyle, R¹ représente un radical alkyle linéaire ou ramifié de 1 à 6 atomes de carbone, R² et R³ représentent indépendamment l'hydrogène ou un groupe de formule -COOR', R' représentant l'hydrogène ou un groupe alkyle de 1 à 6 atomes de carbone,
b) 5 à 100 % en poids, par rapport au poids de la composition de monomères pour la fabrication des segments apolaires, d'un ou de plusieurs composés d'ester éthyléniquement insaturés de formule (II) 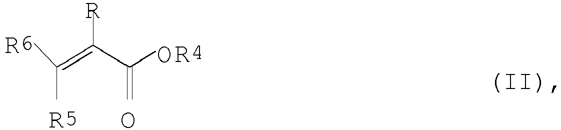 dans laquelle R représente hydrogène ou méthyle, R⁴ représente un radical alkyle linéaire ou ramifié de 7 à 15 atomes de carbone, R⁵ et R⁶ représentent indépendamment l'hydrogène ou un groupe de formule -COOR", R" représentant l'hydrogène ou un groupe alkyle de 7 à 15 atomes de carbone,
c) 0 à 80 % en poids, par rapport au poids de la composition de monomères pour la fabrication des segments apolaires, d'un ou de plusieurs composés d'ester éthyléniquement insaturés de formule (III) 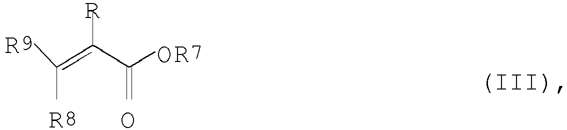 dans laquelle R représente hydrogène ou méthyle, R⁷ représente un radical alkyle linéaire ou ramifié de 16 à 30 atomes de carbone, R⁸ et R⁹ représentent indépendamment l'hydrogène ou un groupe de formule -COOR''', R''' représentant l'hydrogène ou un groupe alkyle de 16 à 30 atomes de carbone,
d) 0 à 50 % en poids, par rapport au poids de la composition de monomères pour la fabrication des segments hydrophobes, d'un comonomère.

8. Copolymère selon au moins l'une quelconque des revendications précédentes, **caractérisé en ce que** le radical R¹⁰ dans au moins un des composés d'ester selon la formule (IV) comprend au moins un groupe de formule - CO-.

9. Copolymère selon la revendication 8, **caractérisé en ce que** le radical R¹⁰ dans au moins un des composés d'ester selon la formule (IV) comprend au moins 2 groupes de formule -CO-.

10. Copolymère selon la revendication 9, **caractérisé en ce que** lesdits au moins deux groupes de formule -CO- sont reliés les uns aux autres par au plus 4 atomes.

11. Copolymère selon au moins l'une quelconque des revendications précédentes, **caractérisé en ce qu'**au moins un segment polaire comprend des unités de répétition dispersantes qui sont dérivées de (méth)acrylate de 2-acétoacétoxyéthyle.

12. Agent lubrifiant, comprenant au moins un copolymère selon au moins l'une quelconque des revendications 1 à 11 précédentes.

13. Agent lubrifiant selon la revendication 12, **caractérisé en ce que** l'agent lubrifiant comprend au moins 10 % en poids d'une huile du groupe III.

14. Utilisation d'un copolymère selon au moins l'une quelconque des revendications 1 à 11 précédentes pour améliorer le coefficient de frottement.

15. Utilisation selon la revendication 14, **caractérisée en ce que** le coefficient de frottement est amélioré dans le domaine du graissage à film d'huile (« boundary lubrication »).

16. Utilisation selon la revendication 14 ou 15, **caractérisée en ce que** la valeur HFRR (High Frequency Reciprocating Rig) est améliorée.

17. Utilisation d'un copolymère selon au moins l'une quelconque des revendications 1 à 11 précédentes pour réduire l'usure.
